# EUROPEAN PATENT SPECIFICATION

(11) **EP 3 968 731 B1**
(45) Date of publication and mention of the grant of the patent: **16.08.2023**
(21) Application number: 20814644.9
(22) Date of filing: 22.05.2020
(51) Int. Cl.: H04W 28/02, H04W 76/15, H04L 5/00, H04L 47/30, H04L 47/27

(54) **COMMUNICATION METHOD APPLICABLE TO MULTIPLE LINKS, AND RELATED DEVICES**
KOMMUNIKATIONSVERFAHREN FÜR MEHRERE VERBINDUNGEN UND ZUGEHÖRIGE VORRICHTUNGEN
PROCÉDÉ DE COMMUNICATION APPLICABLE À DE MULTIPLES LIAISONS, ET DISPOSITIFS ASSOCIÉS

(30) Priority: 25.05.2019 CN 201910455575
(43) Date of publication of application: 16.03.2022
(73) Proprietor: Huawei Technologies Co., Ltd., Shenzhen, Guangdong 518129 (CN)
(72) Inventor: GAN, Ming, Shenzhen, Guangdong 518129 (CN); YANG, Xun, Shenzhen, Guangdong 518129 (CN)
(74) Representative: Maiwald GmbH
(86) International application number: PCT/CN2020/091940
(87) International publication number: WO 2020/238812

(56) References cited:
- CN-A- 104 541 568
- CN-A- 106 464 354
- CN-A- 106 506 125
- CN-A- 109 040 869
- US-A1- 2015 282 005
- US-A1- 2018 302 825
- US-A1- 2018 375 969
- US-A1- 2019 150 214
- CABRAL, Orlando et al.: "Implementation of Multi-service IEEE 802.11e Block Acknowledgement Policies", IAENG International Journal of Computer Science, vol. 36, no. 1,, 17 February 2009 (2009-02-17), XP055339253, DOI: 20200803163248

## Description

### TECHNICAL FIELD

This application relates to the field of communication technologies, and in particular, to a multi-link communication method and a related device.

### BACKGROUND

US 2018 302825 A1 describes systems and methods for flow control in a wireless communication system. US2018375969A1 describes systems and methods for large media access control service data unit (MSDU) delivery. To greatly improve a service transmission rate of a wireless local area network (wireless local access network, WLAN) system, in the institute o.f electrical and Electronics Engineers (institute of electrical and electronics engineers, IEEE) 802.11ax standard, the orthogonal frequency division multiple access (orthogonal frequency division multiple access, OFDMA) technology is further adopted based on the existing orthogonal frequency division multiplexing (orthogonal frequency division multiplexing, OFDM) technology. The OFDMA technology supports multiple nodes in sending and receiving data simultaneously. This achieves multi-station diversity gains. The 802.11ax standard and a standard earlier than 802.11ax configure multiple links for wireless fidelity (wireless-fidelity, Wi-Fi) of a same operating frequency band, but different basic service sets (basic service sets, BSSs) are established on each link. Communication can only be performed on one link with a station in a BSS to which the link belongs at a time. This affects communication efficiency.

### SUMMARY

This invention is defined by the appended claims. This application discloses multi-link communication methods, to improve communication efficiency.

According to a first aspect, this application provides a multi-link communication method, including: A first device sends an ADDBA request frame to a second device, where the ADDBA request frame includes a reference value of at least one first buffer size field and a reference value of one second buffer size field, and the first device and the second device are multi-link entities including one or more links.
The first device receives an ADDBA response frame sent by the second device, where the ADDBA response frame includes an acknowledgment value of the at least one first buffer size field and an acknowledgment value of the second buffer size field. The first device establishes a multi-link block acknowledgement session between multiple links of the first device and multiple links of the second device based on the ADDBA request frame and the ADDBA response frame. One first buffer size field is used to indicate a size of a local buffer space corresponding to one link in the multiple links of the first device and the multiple links of the second device, and the second buffer size field is used to indicate a size of a global buffer space maintained by the first device and the second device. The size of the global buffer space and sizes of multiple local buffer spaces are negotiated by using the ADDBA request frame and the ADDBA response frame, and the multi-link block acknowledgment session is established. The multi-link block acknowledgment session is used to implement communication on multiple links.

The first device maintains multiple first send windows and one second send window based on the ADDBA request frame and the ADDBA response frame, where the multiple first send windows are corresponding to the multiple links of the first device, and the second send window is corresponding to the multi-link entity of the first device. The send windows are used to manage and control sending of a data packet, so that the data packet can be sent over multiple links.

One first send window is corresponding to one link in the multiple links, a starting sequence number of the first send window is WinStartO1, an end sequence number is WinEndO1, and a window size is WinSizeO1, where WinSizeO1 is equal to the acknowledgment value of the first buffer size field corresponding to the link. A starting sequence number of the second send window is WinStartO2, an end sequence number is WinEndO2, and a window size is WinSizeO2, where WinSizeO2 is equal to the acknowledgment value that is of the second buffer size and that is negotiated by using the ADDBA request frame and the ADDBA response frame. The sizes of the send windows, the starting sequence numbers, and the end sequence numbers are used to ensure sending of the data packet.

In another possible design, the ADDBA request frame includes a first block acknowledgment starting sequence control field and a second block acknowledgment starting sequence control field. The first block acknowledgment starting sequence control field is used to indicate a first initial sequence number of a starting sequence number of a first scoreboard of the link of the second device, or may be used to indicate a first initial sequence number of a starting sequence number of a first receive window of the link of the second device. A type of the first initial sequence number is a local sequence number. The second block acknowledgment starting sequence control field is used to indicate a second initial sequence number of a starting sequence number of a second scoreboard of the multi-link entity of the second device, or may be used to indicate a first initial sequence number of a starting sequence number of a second receive window of the link of the second device. A type of the second initial sequence number is a global sequence number. The first initial sequence number is used to indicate a low MAC layer of the second device to maintain a scoreboard or a receive window. The second initial sequence number is used to indicate a high MAC layer of the second device to maintain a scoreboard or a receive window.

In another possible design, the ADDBA request frame includes at least one of a link bitmap field and the reference value of the at least one first buffer size field, or at least one of a link quantity field, a multi-link identity number field, and the reference value of the at least one first buffer size field. The ADDBA response frame includes at least one of a link bitmap field and the acknowledgment value of the at least one first buffer size field, or at least one of a link quantity field, a multi-link identity number field, and the acknowledgment value of the at least one first buffer size field. The first buffer size is negotiated by using the ADDBA request frame and the ADDBA response frame. This ensures that a size of a local buffer space of each link of the first device is the same as that of the second device.

In another possible design, the ADDBA request frame includes a first block acknowledgment parameter set field, and the first block acknowledgment parameter set field includes the reference value of the second buffer size field. The ADDBA response frame includes a second block acknowledgment parameter set field, and the second block acknowledgment parameter set field includes the acknowledgment value of the second buffer size. The second buffer size is negotiated by using the ADDBA request frame and the ADDBA response frame. This ensures that the multi-link entities of the first device and the second device have a same size of the global buffer space.

In another possible design, the first device sends a data packet to the second device, and receives an acknowledgment message returned by the second device in response to the data packet. The data packet includes a local sequence number and a global sequence number, where the local sequence number is an identifier allocated to the data packet by a link that is in the multiple links and that sends the data packet, and the global sequence number is an identifier allocated to the data packet by the multi-link entity. The first device can correctly send data packets of a same type on the multiple links by using the local sequence number and the global sequence number, to improve communication efficiency.

In another possible design, the first device sends a block acknowledgment request frame or a multi-user block acknowledgment request trigger frame to the second device, where the block acknowledgment request frame or the multi-user block acknowledgment request trigger frame includes a starting sequence control field, and the starting sequence control field includes a starting sequence number. The block acknowledgment request frame or the multi-user block acknowledgment request trigger frame further includes first indication information, where the first indication information is used to indicate a type of the starting sequence number, and the type of the starting sequence number includes a local sequence number or a global sequence number. Therefore, the second device may acknowledge, by using the type of the starting sequence number, that the data packet is received, and generate a block acknowledgment bitmap corresponding to the local sequence number or a block acknowledgment bitmap corresponding to the global sequence number.

In another possible design, the first device receives a block acknowledgment frame sent by the second device, where the block acknowledgment frame includes the starting sequence control field, the starting sequence control field includes the starting sequence number and a block acknowledgment bitmap, and the block acknowledgment bitmap is used to indicate a receiving status of the data packet received by the second device. The block acknowledgment frame further includes a block acknowledgment BA control field, where the BA control field includes second indication information, the second indication information is used to indicate the type of the starting sequence number, the type of the starting sequence number is the local sequence number or the global sequence number, and a first bit in the block acknowledgment bitmap is corresponding to the starting sequence number.

In another possible design, both the ADDBA request frame and the ADDBA response frame include a block acknowledgment function field, and the block acknowledgment function field includes information used to indicate a function type of a multi-link block acknowledgment session. The function type of the multi-link block acknowledgment session includes: a multi-link block acknowledgment request, a multi-link block acknowledgment response, and multi-link block acknowledgment session teardown. Information in the ADDBA request frame indicates that the multi-link block acknowledgment session is the multi-link block acknowledgment request. The information in the ADDBA response frame indicates that the multi-link block acknowledgment session is the multi-link block acknowledgment response. A function of the multi-link block acknowledgment session is negotiated to be added by using the ADDBA request frame and ADDBA response frame. This ensures successful establishment of the multi-link block acknowledgment session.

According to a second aspect, this application provides a multi-link communication method, including: A second device receives an ADDBA request frame from a first device, where the ADDBA request frame includes a reference value of at least one first buffer size field and a reference value of one second buffer size field, and the first device and the second device are multi-link entities including one or more links. The second device sends an ADDBA response frame to the first device, where the ADDBA response frame includes an acknowledgment value of the at least one first buffer size field and an acknowledgment value of the second buffer size field. The second device establishes a multi-link block acknowledgment session between multiple links of the first device and multiple links of the second device based on the ADDBA request frame and the ADDBA response frame. One first buffer size field is used to indicate a size of a local buffer space corresponding to one link in the multiple links of the first device and the multiple links of the second device, and the second buffer size field is used to indicate a size of a global buffer space maintained by the first device and the second device. The size of the global buffer space and sizes of multiple local buffer spaces are negotiated by using the ADDBA request frame and the ADDBA response frame, and the multi-link block acknowledgment session is established. The multi-link block acknowledgment session is used to implement communication on multiple links.

The second device maintains a receive window based on the ADDBA request frame and the ADDBA response frame, where the receive window is corresponding to the link entity of the second device. A starting sequence number of the receive window is WinStartB2, an end sequence number is WinEndB2, and a window size is WinSizeB2, where WinSizeB2 is equal to the smaller value between the acknowledgment value of the second buffer size field and a block acknowledgment bitmap of a maximum length. The send window is used to manage and control sending of a data packet, so that the data packet can be sent over multiple links. This improves communication efficiency.

The second device maintains multiple first receive windows and one second receive window based on the ADDBA request frame and the ADDBA response frame, where the multiple first receive windows are corresponding to the multiple links of the second device, and the second receive window is corresponding to the link entity of the second device. The send window is used to manage and control sending of a data packet, so that the data packet can be sent over multiple links. This improves communication efficiency.

One first receive window is corresponding to one link in the multiple links, a starting sequence number of the first receive window is WinStartB 1, an end sequence number is WinEndB 1, and a window size is WinSizeB 1, where WinSizeB 1 is equal to the smaller value between the acknowledgment value of the first buffer size field corresponding to the link and a block acknowledgment bitmap of a maximum length. A starting sequence number of the second receive window is WinStartB2, and an end sequence number is WinEndB2, and a window size is WinSizeB2, where WinSizeB2 is equal to the smaller value between the acknowledgment value of the second buffer size and the block acknowledgment bitmap of the maximum length. A received data packet is reordered by using the sizes of the receive windows, the starting sequence numbers, and the end sequence numbers.

In another possible design, the ADDBA request frame includes a first block acknowledgment starting sequence control field and a second block acknowledgment starting sequence control field. The first block acknowledgment starting sequence control field is used to indicate a first initial sequence number of a starting sequence number of a first scoreboard of the link of the second device, or may be used to indicate a first initial sequence number of a starting sequence number of a first receive window of the link of the second device. A type of the first initial sequence number is a local sequence number. The second block acknowledgment starting sequence control field is used to indicate a second initial sequence number of a starting sequence number of a second scoreboard of the multi-link entity of the second device, or may be used to indicate a first initial sequence number of a starting sequence number of a second receive window of the link of the second device. A type of the second initial sequence number is a global sequence number. The first initial sequence number is used to indicate a low MAC layer of the second device to maintain a scoreboard or a receive window. The second initial sequence number is used to indicate a high MAC layer of the second device to maintain a scoreboard or a receive window.

In another possible design, the ADDBA request frame includes at least one of a link bitmap field and the reference value of the at least one first buffer size field, or at least one of a link quantity field, a multi-link identity number field, and the reference value of the at least one first buffer size field. The ADDBA response frame includes at least one of a link bitmap field and the acknowledgment value of the at least one first buffer size field, or at least one of a link quantity field, a multi-link identity number field, and the acknowledgment value of the at least one first buffer size field. The first buffer size is negotiated by using the ADDBA request frame and the ADDBA response frame. This ensures that a size of a local buffer space of each link of the first device is the same as that of the second device. The first buffer size is negotiated by using the ADDBA request frame and the ADDBA response frame. This ensures that a size of a local buffer space of each link of the first device is the same as that of the second device.

In another possible design, the ADDBA request frame includes a first block acknowledgment parameter set field, and the first block acknowledgment parameter set field includes the reference value of the second buffer size field. The ADDBA response frame includes a second block acknowledgment parameter set field, and the second block acknowledgment parameter set field includes the acknowledgment value of the second buffer size. The second buffer size is negotiated by using the ADDBA request frame and the ADDBA response frame. This ensures that the multi-link entities of the first device and the second device have a same size of the global buffer space.

In another possible design, the second device receives a data packet sent by the first device, and sends an acknowledgment message in response to the data packet to the first device. The data packet includes a local sequence number and a global sequence number, where the local sequence number is an identifier allocated to the data packet by a link that is in the multiple links and that sends the data packet, and the global sequence number is an identifier allocated to the data packet by the multi-link entity. The second device can correctly receive data packets of a same type on the multiple links by using the local sequence number and the global sequence number, to improve communication efficiency.

In another possible design, the second device receives a block acknowledgment request frame or a multi-user block acknowledgment request trigger frame sent by the first device, where the block acknowledgment request frame or the multi-user block acknowledgment request trigger frame includes a starting sequence control field, and the starting sequence control field includes a starting sequence number. The block acknowledgment request frame or the multi-user block acknowledgment request trigger frame further includes first indication information, where the first indication information is used to indicate a type of the starting sequence number, and the type of the starting sequence number includes a local sequence number or a global sequence number. Therefore, the second device may acknowledge, by using the type of the starting sequence number, that the data packet is received, and generate a block acknowledgment bitmap corresponding to the local sequence number or a block acknowledgment bitmap corresponding to the global sequence number.

In another possible design, the second device maintains multiple first scoreboards and one second scoreboard. The multiple first scoreboards are corresponding to the multiple links, and the second scoreboard is corresponding to the multi-link entity. A starting sequence number of one first scoreboard is WinStartR1, an end sequence number of the first scoreboard is WinEndR1, and a scoreboard size WinSizeR1 is equal to the smaller value between an acknowledgment value of the first buffer size field corresponding to a link corresponding to the first scoreboard and a block acknowledgment bitmap of a maximum length. A starting sequence number of the second scoreboard is WinStartR2, an end sequence number is WinEndR2, and a size of the scoreboard is WinSizeR2, where WinSizeR2 is equal to the smaller value between the acknowledgment value of the second buffer size and the block acknowledgment bitmap of the maximum length. The multiple first scoreboards and one second scoreboard are maintained. This ensures that the second device correctly acknowledges the received data packet.

In another possible design, the acknowledgment message is a block acknowledgment frame. The block acknowledgment frame includes the starting sequence control field, the starting sequence control field includes the starting sequence number and a block acknowledgment bitmap, and the block acknowledgment bitmap is used to indicate a receiving status of the data packet received by the second device. The block acknowledgment frame further includes a block acknowledgment BA control field, where the BA control field includes the second indication information, the second indication information is used to indicate the type of the starting sequence number, the type of the starting sequence number is the local sequence number or the global sequence number, and a first bit in the block acknowledgment bitmap is corresponding to the starting sequence number.

In another possible design, if a sequence corresponding to the block acknowledgment bitmap is the local sequence number, a sequence number corresponding to the first bit in the block acknowledgment bitmap is WinStartR1; or if a sequence corresponding to the block acknowledgment bitmap is the global sequence number, a sequence number corresponding to the first bit in the block acknowledgment bitmap is WinStartR2.

In another possible design, both the ADDBA request frame and the ADDBA response frame include a block acknowledgment function field, and the block acknowledgment function field includes information used to indicate a function type of a multi-link block acknowledgment session. The function type of the multi-link block acknowledgment session includes: a multi-link block acknowledgment request, a multi-link block acknowledgment response, and multi-link block acknowledgment session teardown. Information in the ADDBA request frame indicates that the multi-link block acknowledgment session is the multi-link block acknowledgment request. The information in the ADDBA response frame indicates that the multi-link block acknowledgment session is the multi-link block acknowledgment response. A function of the multi-link block acknowledgment session is negotiated to be added by using the ADDBA request frame and ADDBA response frame. This ensures successful establishment of the multi-link block acknowledgment session.

According to a third aspect, a non-claimed embodiment of this application provides a data frame transmission method, including: A first device sends a message frame to a second device, where the message frame includes first indication information, and the first indication information is used to indicate a primary link in multiple links. Second indication information is sent to the second device over the primary link, where the second indication information indicates a working state or a sleep state of the multiple links; or TWT negotiation is performed with the second device over the primary link, so that another link is in a sleep state or a disabled state. This reduces power.

In a possible design, the first indication information is a special element. The first device may send the message frame to the second device over the primary link, where the message frame may carry one special element, and the special element is carried only in the message frame sent over the primary link. The special element is used to indicate that a link over which the message frame is transmitted is a primary link. The primary link is indicated by using the special element, so that another link is in a sleep state or a disabled state, and power is reduced.

In another possible design, the first indication information is a link sequence number. The first device may send the message frame to the second device over a non-primary link, where the message frame may carry a reduced neighbor report element or a multi-band element, and the reduced neighbor report element or the multi-band element includes the link sequence number. The link sequence number is used to indicate the primary link of the multiple links. The primary link is indicated by using the link sequence number, so that another link is in a sleep state or a disabled state, and power is reduced.

In another possible design, an operating class field is added to an information field of a single-user TWT parameter or an information field of a broadcast TWT parameter, to indicate a link, in the multiple links, in which a TWT element is used with reference to the operating class field and a TWT channel field. An indication value may be added to the information field of the broadcast TWT parameter, and the indication value is used to indicate a link, in the multiple links, in which the TWT element is used. This implements working within a service window indicated by the TWT parameter and sleeping outside the service window, and reduces power.

In another possible design, one or more link sequence numbers are added to an information field of a single-user TWT parameter and an information field of a broadcast TWT parameter, where the link sequence numbers are used to indicate a link, in the multiple links, in which a TWT element is used. Alternatively, a link sequence number bitmap is used to indicate a link, in the multiple links, in which a TWT element is used. This implements working within a service window indicated by the TWT parameter and sleeping outside the service window, and reduces power.

According to a fourth aspect, non-claimed embodiment of this application provides a data frame transmission method, including: A second device receives a message frame sent by a first device, where the message frame includes first indication information, and the first indication information is used to indicate a primary link in multiple links. The second device receives second indication information sent by the first device over the primary link, where the second indication information indicates a working state or a sleep state of the multiple links, or performs TWT negotiation with the first device over the primary link, so that another link is in a sleep state or a disabled state. This reduces power.

In a possible design, the first indication information is a special element. The second device may receive the message frame sent by the first device over the primary link, where the message frame may carry one special element, and the special element is carried only in the message frame sent over the primary link. The special element is used to indicate that a link over which the message frame is transmitted is a primary link. The primary link is indicated by using the special element, so that another link is in a sleep state or a disabled state, and power is reduced.

In another possible design, the first indication information is a link sequence number. The second device may receive the message frame sent by the first device over a non-primary link, where the message frame may carry a reduced neighbor report element or a multi-band element, and the reduced neighbor report element or the multi-band element includes the link sequence number. The link sequence number is used to indicate the primary link of the multiple links. The primary link is indicated by using the link sequence number, so that another link is in a sleep state or a disabled state, and power is reduced.

According to a fifth aspect, non-claimed embodiment of this application provides a first communication apparatus. The first device is configured to implement the method and the functions performed by the first device in the first aspect and the third aspect, and is implemented by hardware/software. The hardware/software includes modules corresponding to the foregoing functions.

According to a sixth aspect, non-claimed embodiment of this application provides a second communication apparatus. The second device is configured to implement the method and the functions performed by the second device in the second aspect and the fourth aspect, and is implemented by hardware/software. The hardware/software includes modules corresponding to the foregoing functions.

According to a seventh aspect, non-claimed embodiment of this application provides another first device, including a processor, a memory, and a communication bus. The communication bus is configured to implement connection and communication between the processor and the memory, and the processor executes a program stored in the memory to implement steps in the first aspect and the third aspect.

In a possible design, the first device provided in this application may include a corresponding module configured to perform behavior of the first entity in the foregoing method design. The module may be software and/or hardware.

According to an eighth aspect, non-claimed embodiment of this application provides another second device, including a processor, a memory, and a communication bus. The communication bus is configured to implement connection and communication between the processor and the memory, and the processor executes a program stored in the memory to implement steps in the second aspect and the fourth aspect.

In a possible design, the second device provided in this application may include a corresponding module configured to perform behavior of the first device in the foregoing method design. The module may be software and/or hardware.

According to a ninth non-claimed aspect, this application provides a computer-readable storage medium. The computer-readable storage medium stores instructions. When the instructions are run on a computer, the computer is enabled to perform the methods in the foregoing aspects.

According to a tenth non-claimed aspect, this application provides a computer program product including instructions When the computer program product runs on a computer, the computer is enabled to perform the methods in the foregoing aspects.

According to an eleventh non-claimed aspect, a chip is provided. The chip includes a processor, configured to invoke, from a memory, and run instructions stored in the memory, so that a communication device in which the chip is installed performs the method according to any one of the foregoing aspects.

According to a twelfth aspect, a non-claimed embodiment of this application further provides another chip, where the chip may be a chip in a first device or a second device. The chip includes an input interface, an output interface, and a processing circuit. The input interface, the output interface, and the circuit are connected to each other through an internal connection path. The processing circuit is configured to perform the method according to any one of the foregoing aspects.

According to a thirteenth non-claimed aspect, another chip is provided. The chip includes an input interface, an output interface, and a processor. Optionally, the chip further includes a memory. The input interface, the output interface, the processor, and the memory are connected to each other through an internal connection path. The processor is configured to execute code in the memory. When the code is executed, the processor is configured to perform the method according to any one of the foregoing aspects.

According to a fourteenth non-claimed aspect, an apparatus is provided. The apparatus is configured to implement the method according to any one of the foregoing aspects.

### BRIEF DESCRIPTION OF DRAWINGS

To describe technical solutions in embodiments of this application or in the background more clearly, the following describes the accompanying drawings for describing the embodiments of this application or the background.
FIG. 1 is a schematic diagram of a multi-band operation according to an embodiment of this application;
FIG. 2 is a schematic diagram of an architecture of multi-band hardware according to an embodiment of this application;
FIG. 3 is a schematic diagram of an architecture of a communication system according to an embodiment of this application;
FIG. 4 is a schematic diagram of structures of an AP and a STA according to an embodiment of this application;
FIG. 5 is a schematic diagram of structures of another AP and another STA according to an embodiment of this application;
FIG. 6 is a schematic flowchart of a multi-link communication method according to this application;
FIG. 7 is a schematic diagram of an ADDBA request frame according to an embodiment of this application;
FIG. 8 is a schematic diagram of a block acknowledgment function field according to an embodiment of this application;
FIG. 9 is a schematic diagram of a block acknowledgment parameter set field according to an embodiment of this application;
FIG. 10 is a schematic diagram of a multi-link element according to an embodiment of this application;
FIG. 11 is a schematic diagram of a structure of a transmit end of a first device according to an embodiment of this application;
FIG. 12 is a schematic diagram of a structure of a receive end of a second device according to an embodiment of this application;
FIG. 13 is a schematic diagram of an ADDBA response frame according to an embodiment of this application;
FIG. 14 is a schematic diagram of a MAC header according to an embodiment of this application;
FIG. 15 is a schematic diagram of a block acknowledgment request frame or a multi-user block acknowledgment request trigger frame according to an embodiment of this application;
FIG. 16 is a schematic diagram of a block acknowledgment frame according to an embodiment of this application;
FIG. 17 is a schematic flowchart of a data frame transmission method according to an embodiment of this application;
FIG. 18 is a schematic diagram of a TWT element according to an embodiment of this application;
FIG. 19 is a schematic diagram of a single-user TWT type according to an embodiment of this application;
FIG. 20 is a schematic diagram of a broadcast TWT type according to an embodiment of this application;
FIG. 21 is a schematic diagram of a structure of a first communication apparatus according to an embodiment of this application;
FIG. 22 is a schematic diagram of a structure of a second communication apparatus according to an embodiment of this application;
FIG. 23 is a schematic diagram of a structure of another first device according to an embodiment of this application; and
FIG. 24 is a schematic diagram of a structure of another second device according to an embodiment of this application.

### DESCRIPTION OF EMBODIMENTS

The following describes embodiments of this application with reference to the accompanying drawings in the embodiments of this application.

The Federal Communications Commission (federal communications commission, FCC) has opened a new free frequency band of 5925 MHz to 7125 MHz, and this frequency band is referred to as 6 GHz. Therefore, in 802.11ax project authorization requests (project authorization requests, PAR), 802.11ax standard workers extend an operating range of an 802.11ax device from 2.4 GHz and 5 GHz to 2.4 GHz, 5 GHz, and 6 GHz. However, a specific standard protocol, for example, a maximum bandwidth of 160M supported by a frame structure, remains unchanged.

Mainstream Wi-Fi protocols of each generation are compatible with legacy stations. For example, a frame structure in an earliest generation of mainstream Wi-Fi 802.11a starts with a preamble, including a legacy short training field (legacy short training field, L-STF), a legacy long training field (legacy long training field, L-LTF), and a legacy signal field (legacy signal field, L-SIG). The preamble in 802.11a is referred to as a legacy preamble. Frame structures in subsequent mainstream Wi-Fi protocols 802.11g, 802.11n, 802.11ac, and 802.11ax all start with legacy preambles, to be compatible with legacy stations.

Because an extremely high throughput (extremely high throughput, EHT) device in an IEEE 802.11 next-generation Wi-Fi protocol needs to be forward compatible, the EHT device also supports the operating frequency band of the 802.11ax device, namely, frequency bands of 2.4 GHz, 5 GHz, and 6 GHz. Similarly, the next-generation Wi-Fi protocol also needs to be forward compatible. A frame structure starts with a legacy preamble, which is followed by a next-generation preamble. The next-generation preamble includes a new function indication for implementing next-generation Wi-Fi protocol EHT, for example, a bandwidth indication related to an ultra-high bandwidth. In addition, the next-generation preamble further carries indication information. The indication information is used to indicate that a physical layer protocol data unit (PHY protocol data unit, PPDU) is an EHT PPDU. In this way, a receive end does not incorrectly determine that the physical layer protocol data unit is a legacy PPDU, for example, a PPDU in 802.11a, a high throughput (high throughput, HT) PPDU in 802.11n, a very high throughput (very high throughput, VHT) PPDU in 802.11ac, or a HE PPDU in 802.11ax. An ultra-high bandwidth is used to improve a peak throughput. In addition, in the IEEE 802.11ax next-generation Wi-Fi EHT protocol, the peak throughput may further be improved in manners such as increasing a number of streams (for example, increasing the number of streams to 16) and cooperation of multiple frequency bands (for example, 2.4 GHz, 5 GHz, and 6 GHz). On a same frequency band, the peak throughput may be improved in a manner such as cooperation of multiple channels. This reduces a service transmission delay. The multiple frequency bands or the multiple channels may be collectively referred to as multiple links.

In the 802.11ax standard and standards earlier than 802.11ax, multiple links are configured for Wi-Fi of one or more operating frequency bands. However, a different BSS is established for each link, and communication can be performed only on one link at a time with a station in a BSS to which the link belongs. In the IEEE 802.11 next-generation Wi-Fi EHT protocol, a continuous ultra-high bandwidth of 6 GHz frequency band is used, and multiple discontinuous links may also be aggregated into an ultra-high bandwidth by using a multi-link cooperation technology. In addition to aggregating a higher bandwidth, the multi-link cooperation technology is further used to simultaneously send data packets of a same type to a same station.

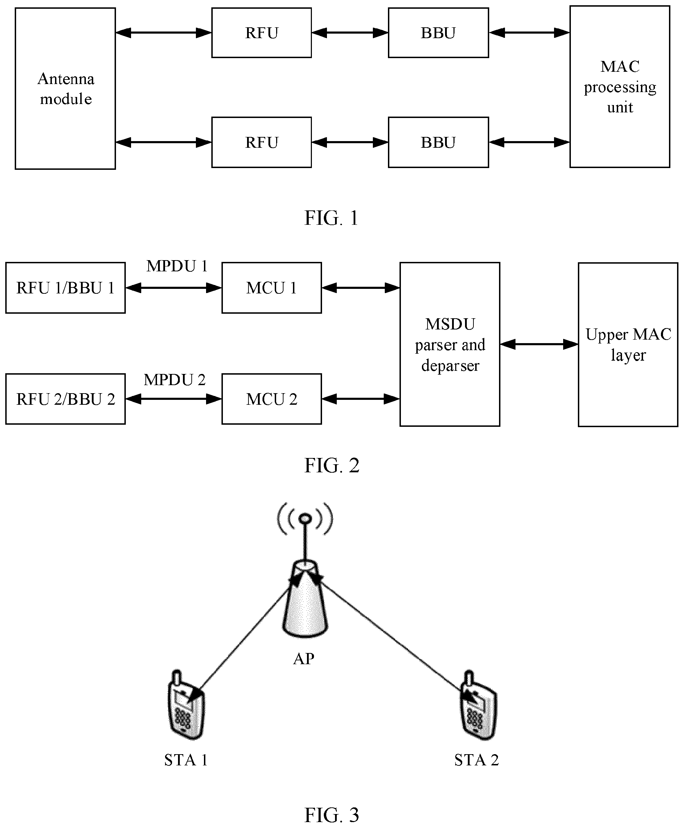

FIG. 1 is a schematic diagram of a multi-band operation according to an embodiment of this application. Wi-Fi operating frequency bands include 2.4 GHz, 5 GHz, 60 GHz, and a frequency band lower than 1 GHz. Mainstream Wi-Fi protocols 802.11a, 802.11b, 802.11g, 802.11n, 802.11ac, and 802.11ax mainly work on 2.4 GHz and 5 GHz, and support a multi-band cooperation technology. FIG. 1 shows operations of two frequency bands, and an operation unit of each frequency band includes a MAC processing unit (MAC unit), a baseband unit (baseband unit, BBU), a radio frequency unit (radio frequency unit, RFU), and an antenna module (antenna module). The MAC processing unit and the antenna module are shared by multiple frequency bands.

FIG. 2 is a schematic diagram of an architecture of multi-band hardware according to an embodiment of this application. The multi-band hardware includes an upper media access control (media access control, MAC) layer (upper MAC layer), a MAC service data unit (MAC service data unit, MSDU) parser and deparser, a MAC control unit (MAC control unit, MCU), a baseband unit (baseband unit, BBU), a radio frequency unit (radio frequency unit, RFU), and an antenna module not shown in the figure. In the multi-band operation, the MAC processing unit is shared, and the upper MAC layer, the parser and the deparser are also shared. The upper MAC layer receives or sends MSDUs processed by the upper MAC layer, and then the parser and the deparser distributes the MSDUs to each frequency band. There is an independent MCU unit on each frequency band. An MCU main unit is used to encapsulate an MSDU into an MPDU, in other words, add a MAC header to the beginning of the MSDU.

Currently, in a mainstream Wi-Fi multi-band operation, an independent BSS is formed on each frequency band, and each BSS independently manages different stations and does not interfere with each other. FST is introduced to 802.11ad on a high frequency of 60 GHz, and the FST may include nontransparent FST and transparent FST. A difference between the nontransparent FST and the transparent FST is that a station in the nontransparent FST uses different MAC addresses on different frequency bands, while a station in the transparent FST uses a same MAC address on different frequency bands. In the FST technology, all services or a specific type of service of a station may be transferred from one frequency band to another frequency band for transmission, and the services are distinguished by service types (traffic identifiers, TID). In addition, an FST session may occur on one frequency band, may be switched from a channel to another channel of a same frequency band, or may occur on multiple frequency bands and/or multiple channels simultaneously. However, when services of the station are transferred from one frequency band to another frequency band for transmission, only one frequency band can be used for transmission at a moment, and it is not considered that multiple frequency bands are simultaneously used to transmit services of a same type to a station. This affects communication efficiency. To resolve the foregoing technical problem, the embodiments of this application provide the following solutions.

FIG. 3 is a schematic diagram of an architecture of a communication system according to an embodiment of this application. The communication system may include an access point (access point, AP) and multiple stations (stations, STA). This embodiment of this application may be applicable to data communication between the AP and one or more STAs, and is also applicable to data communication between APs, or data communication between STAs. The AP may be used as the first device mentioned in this application, or may be used as the second device mentioned in this application. The STA may be used as the first device mentioned in this application, or may be used as the second device mentioned in this application. In a WLAN system 802.11ax to which an OFDMA technology is introduced, the AP may perform uplink and downlink transmission with different STAs on different time-frequency resources. The AP may perform uplink and downlink transmission in different modes, for example, in an OFDMA single-user multiple-input multiple-output (single-user multiple-input multiple-output, SU-MIMO) mode or in an OFDMA multi-user multiple-input multiple-output (multi-user multiple-input multiple-output, MU-MIMO) mode.

The AP may be an access point used by a mobile user to access a wired network, and is mainly deployed inside a house, a building, and a campus, with a typical coverage radius of tens of meters to hundreds of meters. Certainly, the AP may also be deployed outdoors. The AP is equivalent to a bridge that connects the wired network and a wireless network. A main function of the AP is to connect wireless network clients together, and then connect the wireless network to the Ethernet. Specifically, the AP may be a terminal device or a network device with a Wi-Fi chip. The AP may be a device that supports the 802.11ax standard. The AP may also be a device that supports multiple WLAN standards such as 802.11ac, 802.11n, 802.11g, 802.11b, and 802.11a. The STA may be a wireless communication chip, a wireless sensor, or a wireless communication terminal. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11ax standard. The STA may also support multiple WLAN standards such as 802.11ac, 802.11n, 802.11g, 802.11b, and 802.11a.

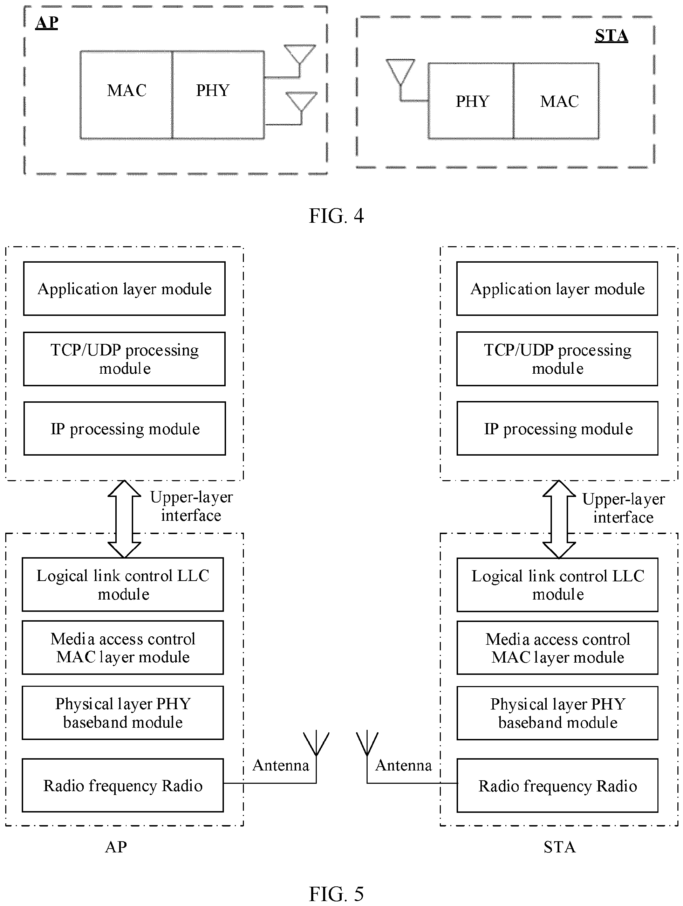

FIG. 4 is a schematic diagram of structures of an AP and a STA according to an embodiment of this application. Because the 802.11 standard only focuses on 802.11 PHY and MAC parts, the figure shows only PHY and MAC parts of the AP and the STA. The AP shown in the figure has a multi-antenna structure, and the STA has a single-antenna structure. In an actual scenario, the AP and the STA may have multi-antenna structures, and may be devices with more than two antennas. FIG. 5 is a schematic diagram of structures of another AP and another STA according to an embodiment of this application. Internal structures of the AP and the STA are the same, and may be sequentially divided, from top to bottom, into an application (application) layer module, a transmission control protocol (transmission control protocol, TCP)/user datagram protocol (user datagram protocol, UDP) processing module, an internet protocol (internet protocol, IP) processing module, a logical link control (logical link control, LLC) module, a MAC layer module, a PHY baseband module, a radio frequency, and an antenna. Multiple antennas may be configured.

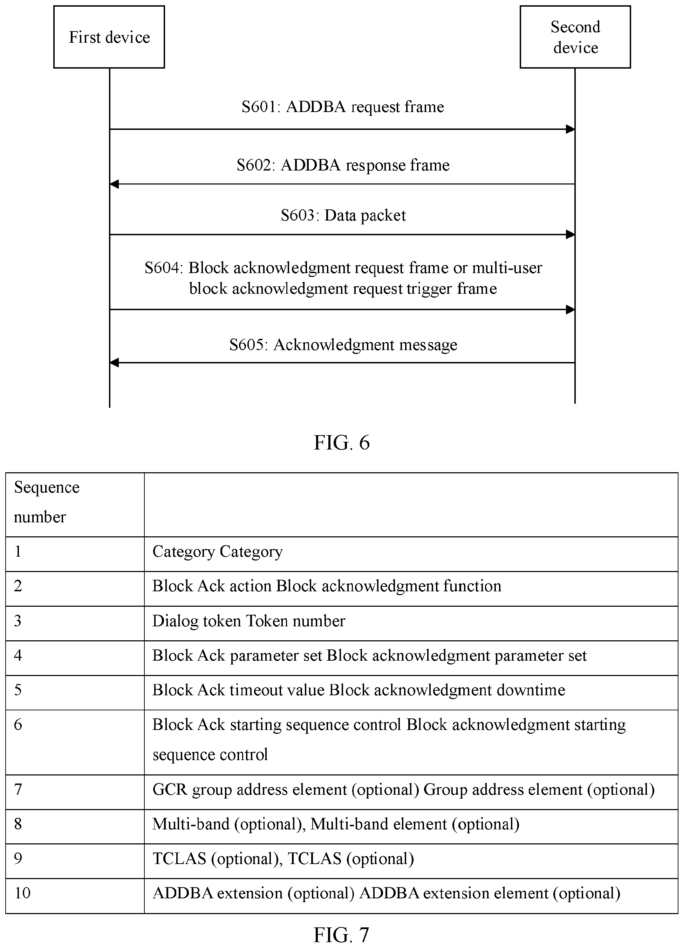

FIG. 6 is a schematic flowchart of a multi-link communication method according to an embodiment of this application. Steps in this embodiment of this application include at least the following steps:

In this embodiment of this application, block acknowledgment (block acknowledgment, BA) transmission is a mechanism introduced to the IEEE 802.11e standard. In the block acknowledgment transmission, a first device is allowed to send multiple data packets without receiving an acknowledgment frame. Then, the first device sends a block acknowledgment request (block acknowledgment request, BAR) frame. After receiving the BAR, a second device needs to feed back a BA to acknowledge a series of data frames sent by the first device. Because the second device transmits one BA frame that carries acknowledgments of the multiple data packets, time for transmitting an acknowledgment frame can be reduced, and channel utilization can be improved. To enable the first device and the second device to send and receive a data packet according to the BA transmission mechanism, before sending the data packet, the first device and the second device need to establish a multi-link BA session by using a BA establishment procedure. The procedure for establishing the multi-link BA session is as follows:

S601: The first device sends an establishment block acknowledgment communication mechanism (add block acknowledgment, ADDBA) request frame to the second device, and the second device receives the ADDBA request frame sent by the first device.

The ADDBA request frame includes one or more first buffer size (buffer size) fields and a second buffer size (buffer size) field, and the first buffer size fields and the second buffer size field are used to provide a reference value for the second device to negotiate a corresponding buffer size field value. The first device may include a multi-link entity and multiple links. The second device may also include a multi-link entity and multiple links. The multiple links of the first device are corresponding to the multiple links of the second device, and each link may include one low MAC layer and one physical (PHY) layer.

FIG. 7 is a schematic diagram of the ADDBA request frame according to an embodiment of this application. The ADDBA request frame may include a block acknowledgment function field, a block acknowledgment parameter set field, and a block acknowledgment starting sequence control field. Optionally, after receiving the ADDBA request frame, the second device needs to feed back an acknowledgment frame Ack, and after receiving an ADDBA response frame, the first device also needs to feed back an acknowledgment frame Ack. The acknowledgment frames Acks in this embodiment of this application are not shown in FIG. 6.

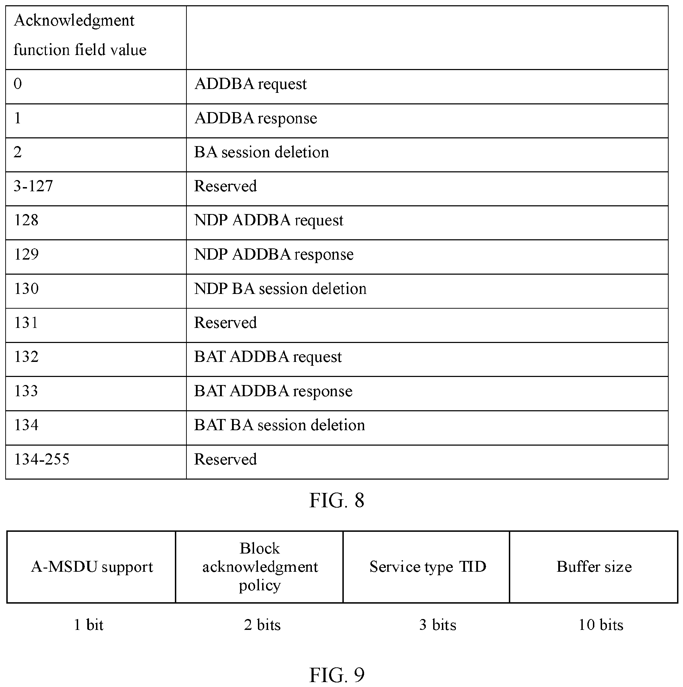

The ADDBA request frame may include the block acknowledgment function field. A function related to a multi-link block acknowledgment session may be added to the block acknowledgment function field in the ADDBA request frame, where the block acknowledgment function field includes information used to indicate a function type of the multi-link block acknowledgment session. The information in the ADDBA request frame indicates that the multi-link block acknowledgment session is a multi-link block acknowledgment request. FIG. 8 is a schematic diagram of the block acknowledgment function field according to an embodiment of this application. The block acknowledgment function field may include field values of 0 to 255. For example, the field value of 0 indicates a function of an ADDBA request, the field value of 1 indicates a function of an ADDBA response, and the field value of 2 indicates BA session deletion. The block acknowledgment function field further includes field values of 3 to 127, 131, and 134 to 255. These field values are reserved field values that may be used to indicate a function type of the multi-link block acknowledgment session, such as a multi-link block acknowledgment request, a multi-link block acknowledgment response, and multi-link block acknowledgment session teardown.

The ADDBA request frame may include one or more first block acknowledgment starting sequence fields, and may further include a second block acknowledgment starting sequence field. The ADDBA request frame includes the block acknowledgment starting sequence control field, and the block acknowledgment starting sequence control field includes a 4-bit fragment field and a 12-bit starting sequence number field. The ADDBA request frame may further include a multi-link element. The multiple first block acknowledgment starting sequence control fields may be carried in the block acknowledgment starting sequence control field, and the second block acknowledgment starting sequence field may be carried in the multi-link element. Alternatively, the multiple first block acknowledgment starting sequence control fields may be carried in the multi-link element, and the second block acknowledgment starting sequence field may be carried in the block acknowledgment starting sequence control field. It should be noted that locations of the multiple first-block acknowledgment starting sequence fields and the secondblock acknowledgment starting sequence fields are not limited. The first block acknowledgment starting sequence control field is used to indicate a first initial sequence number of a starting sequence number of a first scoreboard of a link of the second device, or may be used to indicate a first initial sequence number of a starting sequence number of a first receive window of the second device. A type of the first initial sequence number is a local sequence number. The first receive window and the first scoreboard are maintained by a low MAC layer of the second device, and the first initial sequence number is used to set an initial value of the first receive window, WinStartB. Details are described as follows. The second block acknowledgment starting sequence control field is used to indicate a second initial sequence number of a starting sequence number of a second scoreboard of the multi-link entity of the second device, or may be used to indicate a second initial sequence number of a starting sequence number of a second receive window of the second device. A type of the second initial sequence number is a global sequence number. The second receive window and the second scoreboard are maintained by a high MAC layer of the second device, and the second initial sequence number is used to set an initial value of the second receive window, WinStartB. Details are described as follows.

The ADDBA request frame may include the block acknowledgment parameter set field, and the block acknowledgment parameter set field includes the second buffer size field. FIG. 9 is a schematic diagram of the block acknowledgment parameter set field according to an embodiment of this application. The block acknowledgment parameter set field may include a 1-bit A-MSDU support field, a 2-bit block acknowledgment policy field, a 3-bit service type field, and a 10-bit buffer size field, where the 10-bit buffer size field may be used to indicate a size of a global buffer space. A size of each field is not limited.

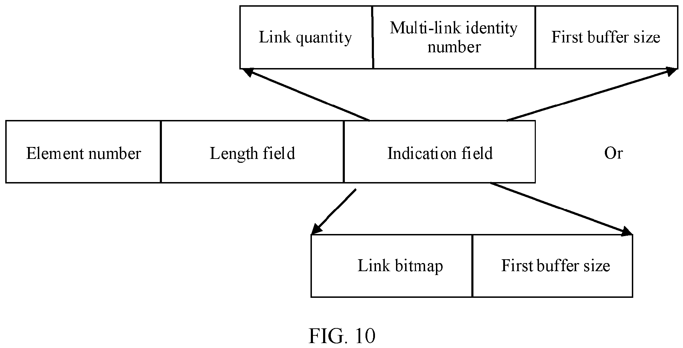

In addition, a multi-link (Multi-link) element may be added to the ADDBA request frame, and the ADDBA request frame includes the multi-link element. FIG. 10 is a schematic diagram of the multi-link element according to an embodiment of this application. The multi-link element includes an element number, a length field, and an indication field. The indication field may include the following two manners: In a first manner, the indication field may include a link bitmap field and at least one first buffer size field. A quantity of first buffer size fields is equal to a quantity of bits whose values are set to "1" in a link bitmap, and the link bitmap field may indicate links that participate in the multi-link BA session. For example, if the 1^{st} link participates in multi-link BA session establishment, the 2^{nd} link does not participate in multi-link BA session establishment, the 3^{rd} link does not participate in multi-link BA session establishment, and the 4^{th} link participates in multi-link BA session establishment, the bitmap may be represented by 1001. In a second manner, the indication field may include a link quantity field, a multi-link identity number field, and at least one first buffer size field. A quantity of link identity number fields and a quantity of first buffer size fields are the same as a value of the link quantity field. The multi-link identity number field is used to indicate links that participate in multi-link BA session establishment. In addition, the multi-link element further includes multiple first block acknowledgment starting sequence control fields, and a quantity of first block acknowledgment starting sequence control fields is equal to a quantity of links participating in the multi-link BA session. The indication field is not limited to being carried in the multi-link element, and may alternatively be carried in an existing field or element in the ADDBA request frame, for example, a multi-band (Multi-Band) element or an ADDBA extension element.

It should be noted that the one or more first buffer size fields and the second buffer size field may alternatively be carried by using another field. For example, the first buffer size fields may alternatively be indicated by using the block acknowledgment parameter set field, and the second buffer size field may alternatively be indicated by using the multi-link element. The first buffer size fields and the second buffer size field may alternatively be indicated in another manner. This is not limited herein.

Optionally, after the second device receives the ADDBA request frame sent by the first device, the second device may send an acknowledgment frame Ack in response to the ADDBA request frame to the first device, and then the first device receives the acknowledgment frame Ack sent by the second device.

S602: The second device sends an ADDBA response frame to the first device, and the first device receives the ADDBA response frame sent by the second device, where the ADDBA response frame includes an acknowledgment value of the one or more first buffer size fields and an acknowledgment value of the second buffer size. The first buffer size fields and the second buffer size field are used as acknowledgment values of block acknowledgment session establishment. The ADDBA request frame and the ADDBA response frame are used to establish a multi-link block acknowledgment session between the multiple links of the first device and the multiple links of the second device.

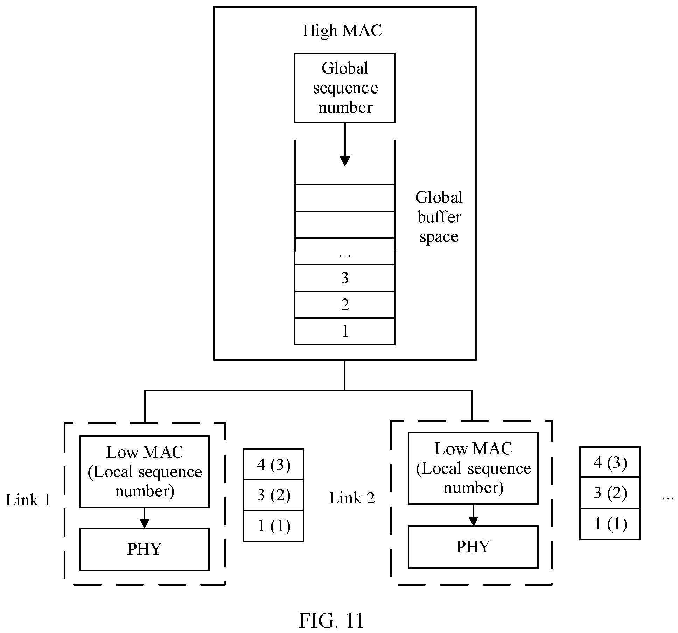

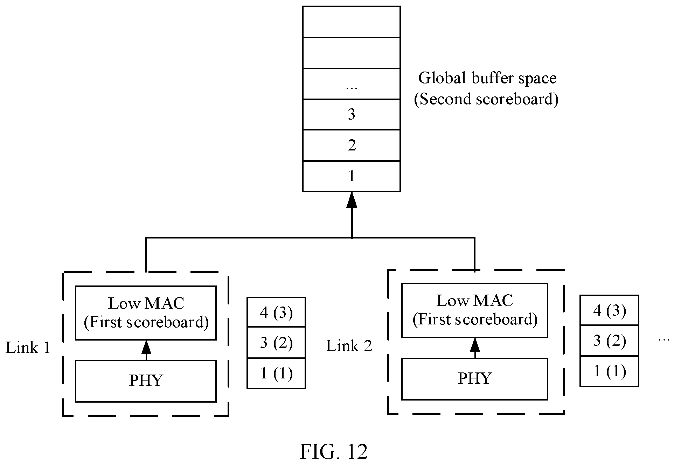

FIG. 11 is a schematic diagram of a structure of a transmit end of the first device according to an embodiment of this application. The first device includes one high MAC layer and the multiple links (for example, a link 1 and a link 2), and a link includes one low MAC layer and one PHY layer. The high MAC layer includes a global buffer space in which a buffer queue may be maintained, and allocates a global sequence number to each data packet. The low MAC layer optionally includes a local buffer space, or may not include a local buffer space, and allocates a local sequence number to each data packet. FIG. 12 is a schematic diagram of a structure of the second device according to an embodiment of this application. A receive end of the second device includes one high MAC layer and the multiple links (for example, a link 1 and a link 2), and a link includes one low MAC layer and one PHY layer. The low MAC layer may include a local buffer space and a first scoreboard, where the first scoreboard may include an acknowledgment in response to data packets of a same type received on the link. The high MAC layer includes a global buffer space and a second scoreboard. A reordering buffer queue may be maintained in the global buffer space, and the second scoreboard may include an acknowledgment in response to data packets of a same type received on a multi-link entity.

In the block acknowledgment session, the first buffer size field is used to indicate a size of the first scoreboard negotiated by links. Optionally, the first buffer size field may also be used for link negotiation on a size of the local buffer space. If there are n links, n first buffer size fields are required. In another implementation, there is one first buffer size field. In this case, a size of a first scoreboard negotiated for each link is the same, and sizes of optional local buffer spaces are the same. The second buffer size field is used to negotiate a size of the second scoreboard and the global buffer space for the multi-link entity. Each multi-link entity negotiates only one second buffer size field, corresponding to the second scoreboard and the global buffer space that share the high MAC layer.

A size of the first buffer size field may be 64, 128, or 256. If the first device has three links, a first buffer size A, a first buffer size B, and a first buffer size C may be added. A size of the second buffer size may be 1024, 2048, 4096, or the like. Generally, the size of the second buffer size field is greater than the size of the first buffer size field, but there are exceptions.

It should be noted that the multi-link entity refers to an entity including one or more links that share a MAC service access point (service access point, SAP). A link refers to a station that has transmitting and receiving functions, such as a station including a PHY layer and a MAC (for example, a low MAC) layer.

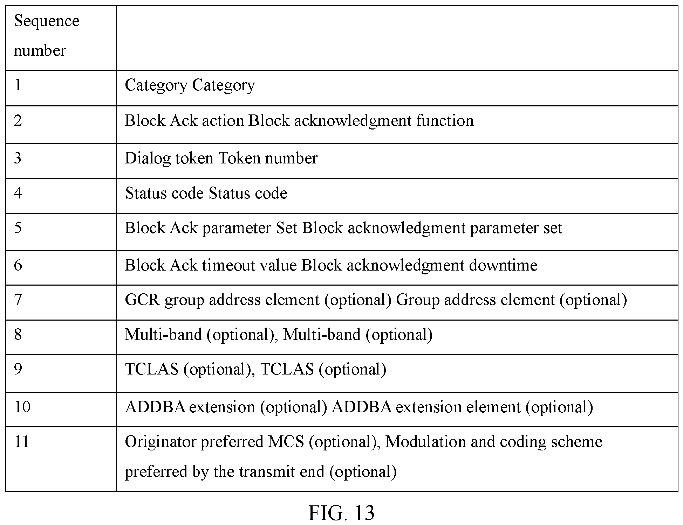

FIG. 13 is a schematic diagram of the ADDBA response frame according to an embodiment of this application. The ADDBA response frame may include a block acknowledgment function field, a block acknowledgment parameter set field, and the like.

A function related to the multi-link block acknowledgment session may be added to the block acknowledgment function field of the ADDBA response frame. The ADDBA response frame includes the block acknowledgment function field, and the block acknowledgment function field includes information used to indicate a function type of the multi-link block acknowledgment session. The information in the ADDBA response frame indicates that the multi-link block acknowledgment session is a multi-link block acknowledgment response. As shown in FIG. 8, the block acknowledgment function field may include field values of 0 to 255. For example, the field value of 0 indicates a function of an ADDBA request, the field value of 1 indicates a function of an ADDBA response, and the field value of 2 indicates a BA session deletion. The block acknowledgment function field further includes field values of 3 to 127, 131, and 134 to 255. These field values are reserved field values that may be used to indicate a function type of the multi-link block acknowledgment session. The function type includes a multi-link block acknowledgment request, a multi-link block acknowledgment response, a multi-link block acknowledgment session teardown, and the like.

The ADDBA response frame may include a second block acknowledgment parameter set field, and the second block acknowledgment parameter set field includes the second buffer size field. FIG. 9 is a schematic diagram of the block acknowledgment parameter set field according to an embodiment of this application. The block acknowledgment parameter set field may include a 1-bit A-MSDU field, a 2-bit block acknowledgment policy field, a 3-bit service type field, and a 10-bit buffer size field, where the 10-bit buffer size field may be used to indicate a size of the global buffer space. A size of each field is not limited.

Optionally, a multi-link (Multi-link) element may be added to the ADDBA response frame, and the ADDBA response frame includes the multi-link element. FIG. 10 is a schematic diagram of the multi-link element according to an embodiment of this application. The multi-link element includes an element number, a length field, and an indication field. The indication field may include a link bitmap field and at least one first buffer size field. A quantity of first buffer size fields is equal to a quantity of bits whose values are set to "1" in a link bitmap, and the link bitmap field may indicate links that participate in the multi-link BA session. For example, if the 1^{st} link participates in multi-link BA session establishment, the 2^{nd} link does not participate in multi-link BA session establishment, the 3^{rd} link does not participate in multi-link BA session establishment, and the 4^{th} link participates in multi-link BA session establishment, the bitmap may be represented by 1001. Second, the indication field may include a link quantity field, a multi-link identity number field, and at least one first buffer size field. A quantity of link identity number fields and a quantity of first buffer size fields are the same as a value of the link quantity field. The link identity number field is used to indicate links that participate in multi-link BA session establishment. In addition, the multi-link element further includes multiple block acknowledgment starting sequence control fields, and a quantity of block acknowledgment starting sequence control fields is equal to a quantity of links participating in the multi-link BA session. The indication field is not limited to being carried in the multi-link element, and may alternatively be carried in an existing field or element in the ADDBA request frame or the ADDBA response frame, for example, a multi-band (Multi-Band) element or an ADDBA extension element.

It should be noted that the one or more first buffer size fields and the second buffer size field may alternatively be carried by using another field. For example, the first buffer size fields may alternatively be indicated by using the block acknowledgment parameter set field, and the second buffer size field may alternatively be indicated by using the multi-link element. The first buffer size fields and the second buffer size field may alternatively be indicated in another manner. This is not limited herein.

Optionally, after the first device receives the ADDBA response frame sent by the second device, the first device may return an acknowledgment frame Ack in response to the ADDBA response frame to the second device, and then the second device receives the acknowledgment frame Ack sent by the first device.

After steps S601 and S602, establishment of the multi-link block acknowledgment session between the multiple links of the first device and the multiple links of the second device is completed, and then the following operations are performed:

S603: The first device sends a data packet to the second device, and the second device receives a data frame that is sent by the first device and that includes the data packet. The data packet may be a data packet MAC service data unit (MAC service data unit, MSDU) or an aggregated MAC service data unit (aggregate MAC service data unit, A-MSDU) in which multiple data packet MSDUs are aggregated. The first device may further send a management frame and a control frame that include a MAC management protocol data unit (MAC manage protocol data unit, MMPDU). The data packet may be a quality of service (quality of service, QoS) data packet.

As shown in FIG. 11, the high MAC layer of the first device maintains the global buffer space, and the high MAC layer separately allocates a global sequence number to a received data packet transferred by an upper layer. Multiple data packets with a same <receiver address, service type> may be classified into a same group of data packets, and the same group of data packets may share a 12-bit sequence number space, ranging from 0 to 4095. Certainly, there is another method for allocating a global sequence number. For example, data packets sent to a same address are classified into a same group of data packets, and the same group of data packets share one sequence number space. This is not limited in the present invention. The global sequence number increases by 1 each time the high MAC layer receives a data packet (belonging to a same group of data packets). For example, if there are three data packets in the global buffer space, and the three data packets are a same group of data packets, a global sequence number 1 is allocated to the 1^{st} data packet, a global sequence number 2 is allocated to the 2^{nd} data packet, and a global sequence number 3 is allocated to the 3^{rd} data packet. The global sequence numbers are identifiers allocated by the multi-link entity to the data packets.

The low MAC layer of the link of the first device may obtain multiple data packets from the global buffer space of the high MAC layer, and allocate a local sequence number. Similarly, multiple data packets with a same <receiver address, service type> on the link may be classified into a same group of data packets, and the same group of data packets may share a 12-bit sequence number space, ranging from 0 to 4095. Certainly, there is another method for allocating a local sequence number. For example, data packets sent to a same address are classified into a same group of data packets, and the same group of data packets share one sequence number space. This is not limited in the present invention. The local sequence number increases by 1 each time the link receives a data packet (belonging to a same group of data packets). For example, as shown in FIG. 9, there are three data packets on two links. The three data packets are a same group of data packets. A number in parentheses is a local sequence number, and a number outside the parentheses is a global sequence number. A low MAC layer of each link separately allocates one local sequence number to each of the three data packets. The local sequence numbers increase sequentially. The local sequence number is an identifier allocated to the data packet by a link that is in the multiple links and that sends the data packet.

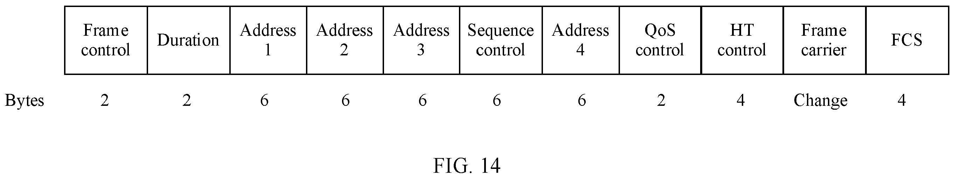

FIG. 14 is a schematic diagram of a MAC header according to an embodiment of this application. After the global sequence number and the local sequence number are allocated, a MAC header is added to a low MAC of each link. The MAC header may include one or more fields of a frame control field, an address 1 field (receiver address), an address 2 field (transmitter address), an address 3 field, a sequence control field, an address 4 field, a QoS control field, and an HT control field. A 2-byte sequence control field may include a 12-bit sequence number and a 4-bit fragment number. One of the local sequence number and the global sequence number may be carried in the sequence control field, and the other may be carried in another field, for example, in the HT control field, or an additional sequence control field added to a frame carrier. Finally, the data packet may be sent to the second device.

The first device may maintain multiple first send windows and one second send window based on the ADDBA request frame and the ADDBA response frame. The multiple first send windows are corresponding to the multiple links of the first device, and the second send window is corresponding to the multi-link entity of the first device. Further, each link maintains one first send window, one of the first send windows is corresponding to one link in the multiple links, a starting sequence number of the first send window is WinStartO1, an end sequence number is WinEndO1, and a window size is WinSizeO1, where WinSizeO1 is equal to the acknowledgment value of the first buffer size field corresponding to the link. In addition, the high MAC layer also maintains a second send window. A starting sequence number of the second send window is WinStartO2, an end sequence number is WinEndO2, and a window size is WinSizeO2, where WinSizeO2 is equal to the acknowledgment value that is of the second buffer size field and that is negotiated by using the ADDBA request frame and the ADDBA response frame.

After the second device receives the data packet, a PHY layer of each link transfers the data packet to the low MAC layer of the link. The low MAC layer of each link may obtain a local sequence number from a MAC header of each data packet, and maintain a first scoreboard based on the local sequence number, where the first scoreboard includes an acknowledgment in response to data packets of a same type received on the link. The first scoreboard may collect statistics on whether a data packet is correctly received on each link. If the data packet is correctly received, the data packet may be counted as 1. If the data packet is not received, the data packet is counted as 0. In addition, the ADDBA request frame includes one or more first block acknowledgment starting sequence control fields, and the first block acknowledgment starting sequence control field includes the first initial sequence number. The first initial sequence number is used to indicate an initial value of the first receive window (optional) of the second device and an initial value of a starting sequence number of the first scoreboard of the second device, and the type of the first initial sequence number is the local sequence number. A link may sequentially acknowledge, based on the first initial sequence number, data packets received on the link, and finally a block acknowledgment bitmap of a status of a received data packet acknowledged by the second device is formed. Then, the block acknowledgment bitmap is included in a local block acknowledgment frame, to be returned to the first device. The local block acknowledgment frame is an acknowledgment in response to multiple data packets received on the link. The local block acknowledgment frame is an immediate response to the data packets received on the link, or may be a response to a BAR frame that is used to solicit the local sequence number and that is received on the link. A size of the block acknowledgment bitmap in the local block acknowledgment frame may be negotiated by using the first buffer size field in the ADDBA request frame and the ADDBA response frame. For a same first buffer size field, there may be block acknowledgment bitmaps of different lengths. For details, refer to the 802.11ax protocol.

The second device may maintain multiple first scoreboards, the multiple first scoreboards are corresponding to the multiple links. A starting sequence number of one of the first scoreboards is WinStartR1, and an end sequence number is WinEndR1. An initial value of WinStartR1 is the first initial sequence number of the first block acknowledgment starting sequence control field in the ADDBA request frame. A size WinSizeR1 of the first scoreboard is equal to the smaller value between an acknowledgment value of the first buffer size field corresponding to a link corresponding to the first scoreboard and a block acknowledgment bitmap of a maximum length. Locations of WinStartR1 and WinEndR1 move with a received data packet. For details, refer to the 802.11-2016 protocol. Details are not described herein again. WinStartR1 determines a starting sequence number of a bitmap of the local block acknowledgment frame (such as a compressed block acknowledgment frame or a multi-station block acknowledgment frame) returned by the second device.

Optionally, the second device may alternatively maintain multiple first receive windows based on the ADDBA request frame and the ADDBA response frame, where the first receive windows are used to sort received data packets, and then sequentially transfer the received data packets to the high MAC layer. The multiple first receive windows are corresponding to the multiple links of the second device. Further, one of the first receive windows is corresponding to one link in the multiple links. A starting sequence number of the first receive window is WinStartB 1, an end sequence number is WinEndB 1, and a window size is WinSizeB 1. An initial value of WinStartB 1 is the first initial sequence number of the first block acknowledgment starting sequence control field in the ADDBA request frame. WinSizeB 1 is equal to the smaller value between an acknowledgment value of the first buffer size field corresponding to the link and a block acknowledgment bitmap of a maximum length. Locations of WinStartB 1 and WinEndB 1 move with a received data packet. For details, refer to the 802.11-2016 protocol. Details are not described herein again. In a possible implementation, the second device does not need to maintain multiple first receive windows based on the ADDBA request frame and the ADDBA response frame.

Optionally, the low MAC layer of each link of the second device may sequentially transfer multiple data packets to the high MAC layer in an order of local sequence numbers of the multiple data packets. In another implementation, the low MAC layer of each link directly transfers the multiple received data packets to the high MAC layer.

Then, the high MAC layer obtains a global sequence number from each data packet, and maintains a second scoreboard based on the global sequence number, where the second scoreboard includes an acknowledgment in response to data packets of a same type received by the multi-link entity. The second scoreboard may collect statistics on whether the multi-link entity correctly receives a data packet. If the data packet is correctly received, the data packet may be counted as 1. If the data packet is not received, the data packet is counted as 0. The ADDBA request frame includes the second block acknowledgment starting sequence control field, and the second block acknowledgment starting sequence control field includes the second initial sequence number. The second initial sequence number is used to indicate an initial value of the second receive window of the second device and an initial value of a starting sequence number of the second scoreboard of the second device, and the type of the second initial sequence number is the global sequence number. The high MAC layer may sequentially acknowledge the multiple data packets based on the second initial sequence number, and finally a block acknowledgment bitmap of a status of a received data packet acknowledged by the second device is formed. Then, the block acknowledgment bitmap is included in a global block acknowledgment frame, to be returned to the first device. The global block acknowledgment frame is a response to a block acknowledgment request frame that is received by the multi-link entity and that is used to solicit the global sequence number, and a size of a block acknowledgment bitmap in the global block acknowledgment frame depends on the second buffer size field negotiated by using the ADDBA request frame and the ADDBA response frame. For a same second buffer size field, there may be block acknowledgment bitmaps of different lengths. Optionally, the global block acknowledgment frame is an acknowledgment that the multi-link entity responds to the multiple received data packets.

The second device may maintain multiple second scoreboards, the second scoreboards are corresponding to the multi-link entity. A starting sequence number of the second scoreboard is WinStartR2, an end sequence number is WinEndR2, and a window size is WinSizeR2. An initial value of WinStartR2 is the second initial sequence number of the second block acknowledgment starting sequence control field in the ADDBA request frame. WinSizeR2 is equal to the smaller value between the acknowledgment value of the second buffer size field and the block acknowledgment bitmap of the maximum length. Locations of WinStartR2 and WinEndR2 move with a received data packet. For details, refer to the 802.11-2016 protocol. Details are not described herein again. WinStartR2 determines a starting sequence number of a bitmap of the global block acknowledgment frame (such as a compressed block acknowledgment frame or a multi-station block acknowledgment frame) returned by the second device.

The second device may alternatively maintain a second receive window based on the ADDBA request frame and the ADDBA response frame, where the second receive window may be used to sort, in the global buffer space based on the global sequence numbers, the data packets received by the multi-link entity, and sequentially transfer the data packets to an upper layer of the MAC layer of the second device in an order of global sequence numbers. The second receive window is corresponding to the link entity of the second device. Further, a starting sequence number of the second receive window is WinStartB2, an end sequence number is WinEndB2, and a window size is WinSizeB2. An initial value of WinStartB2 is the second initial sequence number of the second block acknowledgment starting sequence control field in the ADDBA request frame. WinSizeB2 is equal to the smaller value between the acknowledgment value of the second buffer size field and the block acknowledgment bitmap of the maximum length. Locations of WinStartB2 and WinEndB2 may move with a received data packet. For details, refer to the 802.11-2016 protocol. Details are not described herein again.

S604: The first device sends a block acknowledgment request frame or a multi-user block acknowledgment request trigger frame to the second device. The second device receives the block acknowledgment request frame or the multi-user block acknowledgment request trigger frame sent by the first device. This step is optional, depending on an acknowledgment policy of the sent data packet. If the policy is block acknowledgment, step S604 is required. If the request policy is normal acknowledgment or implicit block request acknowledgment request policy, step S604 is not performed. In this case, the data packet solicits an immediate feedback.

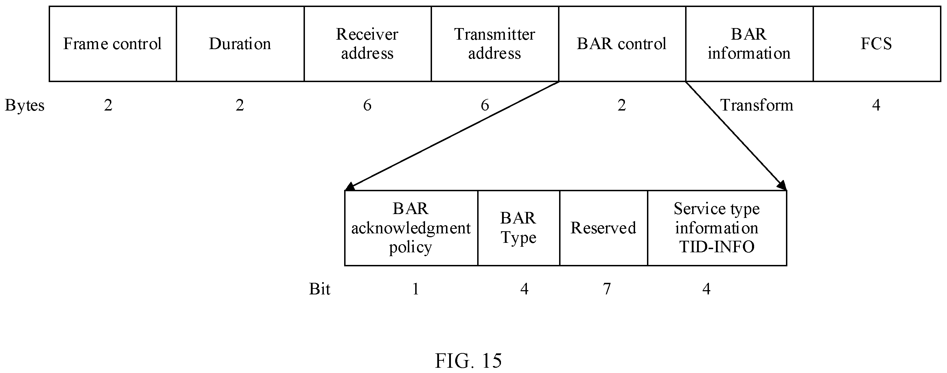

FIG. 15 is a schematic diagram of the block acknowledgment request frame or the multi-user block acknowledgment request trigger frame according to an embodiment of this application. The block acknowledgment request frame or the multi-user block acknowledgment request trigger frame may include a starting sequence control field, and the starting sequence control field includes a starting sequence number. The block acknowledgment request frame or the multi-user block acknowledgment request trigger frame further includes a BAR control field, where the BAR control field includes first indication information, the first indication information is used for a type of the starting sequence number, and the type of the starting sequence number includes a local sequence number or a global sequence number. The block acknowledgment request frame (for example, variants of the block acknowledgment request frame, including a multi-service type BAR, an extended compressed BAR, a compressed BAR, a multicast BAR or a basic BAR) or the multi-user block acknowledgment request trigger frame includes a global block acknowledgment request frame and a local block acknowledgment request frame. The block acknowledgment request frame may be determined as the global block acknowledgment request frame or the local block request acknowledgment frame based on a BAR type indicated by the first indication information. The starting sequence number of the starting sequence control field in the block acknowledgment request frame (for example, the variants of the block acknowledgment request frame, including the multi-service type BAR, the extended compressed BAR, the compressed BAR, the multicast BAR or the basic BAR) or the multi-user block acknowledgment request trigger frame is a starting local sequence number or a starting global sequence number indicated by the first indication information.

S605: The second device sends an acknowledgment message to the first device in response to the data packet, and the first device receives the acknowledgment message returned by the second device in response to the data packet, where the acknowledgment message includes a block acknowledgment frame. The block acknowledgment frame includes a global block acknowledgment frame and a local block acknowledgment frame, and the block acknowledgment frame may be a compressed block acknowledgment frame, a multi-station block acknowledgment frame, or the like.

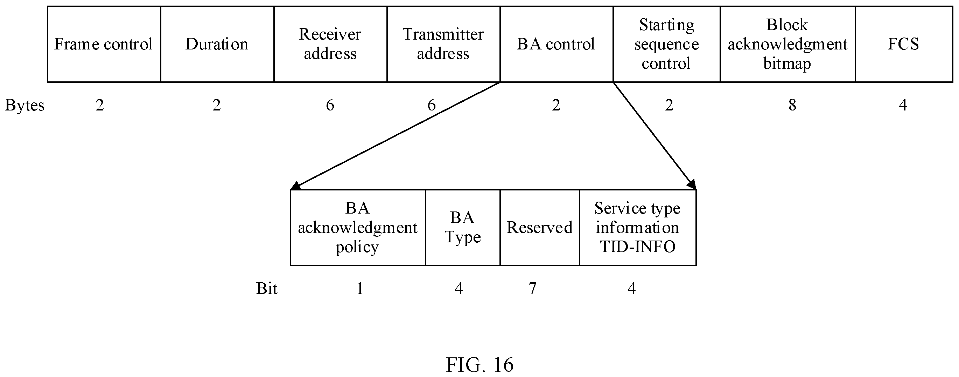

FIG. 16 is a schematic diagram of the block acknowledgment frame according to an embodiment of this application. The block acknowledgment frame may include a starting sequence control field, and the starting sequence control field includes a starting sequence number and a block acknowledgment bitmap. The block acknowledgment bitmap is used to indicate a receiving status of the data packet received by the second device. The block acknowledgment frame (including variants of the block acknowledgment frame, such as a basic block acknowledgment, a compressed block acknowledgment, a multi-station block acknowledgment, and multi-service type block acknowledgment) may further include a BA control field, where the BA control field includes second indication information. The second indication information is used to indicate that a type of the starting sequence number of the starting sequence control field in the block acknowledgment frame is a local sequence number or a global sequence number, a first bit in the block acknowledgment bitmap is corresponding to the starting sequence number, and a type of a sequence number corresponding to each bit in the bitmap is the same. The block acknowledgment frame (for example, the variants of the block acknowledgment frame, including the basic block acknowledgment, the compressed block acknowledgment, the multi-station block acknowledgment, and the multi-service type block acknowledgment) includes the global block acknowledgment frame and the local block acknowledgment frame. The block acknowledgment frame may be determined as the global block acknowledgment frame or the local block acknowledgment frame based on a BA type indicated by the second indication information.

The block acknowledgment frame may include the block acknowledgment bitmap. If a sequence corresponding to the block acknowledgment bitmap is the local sequence number, a sequence number corresponding to the first bit in the block acknowledgment bitmap is WinStartR1 or a local starting sequence number of the starting sequence control field. If a sequence corresponding to the block acknowledgment bitmap is the global sequence number, a sequence number corresponding to the first bit in the block acknowledgment bitmap is WinStartR2 or a global starting sequence number of the starting sequence control field.

In this embodiment of this application, through negotiation by using the ADDBA request frame and the ADDBA response frame, the first device and the second device allocate one local buffer space to each of the multiple links, and allocate one global buffer space to the high MAC layer. In this way, the multi-link block acknowledgment session is established. In addition, the MAC of the data packet sent by the first device includes the local sequence number and the global sequence number. In this way, the first device can send data packets of a same type to the second device on the multiple links, to improve data communication efficiency.

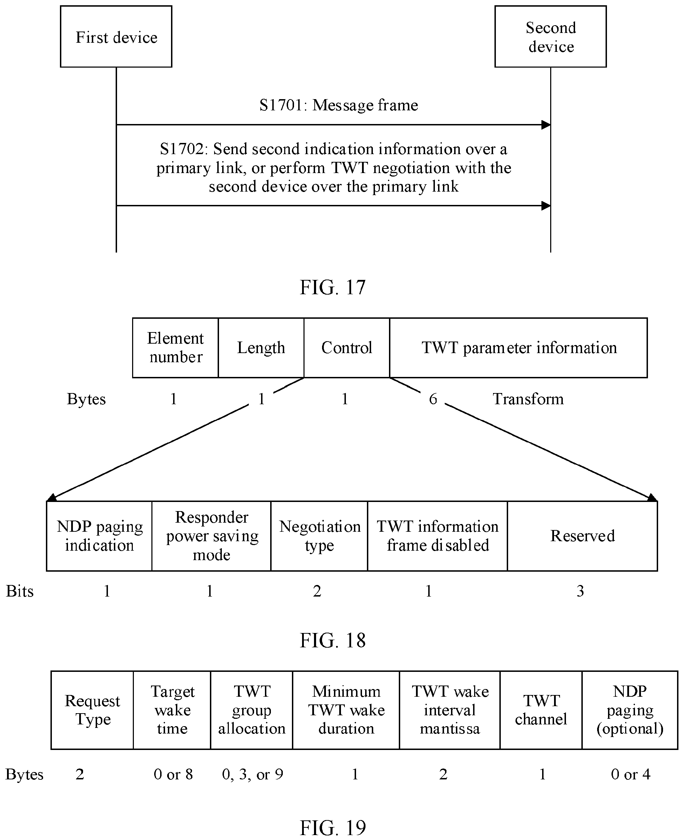

FIG. 17 is a schematic flowchart of a data frame transmission method according to an embodiment of this application. This embodiment of this application includes at least the following steps.

S1701: A first device sends a message frame to a second device, and the second device receives the message frame sent by the first device, where the message frame includes first indication information, and the first indication information is used to indicate a primary link in multiple links. The following two optional manners are included.

In a first optional manner, the first indication information is a special element. The first device may send the message frame to the second device over the primary link, where the message frame may carry one special element (for example, an element related to multi-link information), and the special element is carried only in the message frame sent over the primary link. The special element is used to indicate that a link over which the message frame is transmitted is a primary link. The message frame may be a beacon frame in a management frame.

In a second optional manner, the first indication information is a link sequence number. The first device may send the message frame to the second device over a non-primary link, where the message frame may carry a reduced neighbor report (reduced Neighbor report) element or a multi-band (Multi-band) element, and the reduced neighbor report element or the multi-band element includes the link sequence number. The link sequence number is used to indicate the primary link of the multiple links.

S 1702: The first device sends second indication information to the second device over the primary link, or performs target wake time (target wake time, TWT) negotiation with the second device over the primary link. The second indication information indicates a working state or a sleep state of the multiple links. The first device and the second device perform TWT negotiation to negotiate one or more service windows, and work within the service windows, and sleep outside the service windows, to save power.

During specific implementation, the second indication information may be carried in an operation mode indication (operating mode indication, OMI) field of a high throughput (high throughput, HT) control field or an operation mode notification (operating mode notification) frame in a MAC header. The second indication information may be a bitmap. For example, if the n^{th} bit is a value 1, it indicates that the n^{th} link is about to be in a sleep state or a disabled state. If the n^{th} bit is set to a value 0, it indicates that the n^{th} link is about to be in a working state. The second indication information may be multiple link sequence numbers. If the second indication information includes a link sequence number 1, a link corresponding to the link sequence number 1 is in a sleep state or a disabled state, and vice versa.

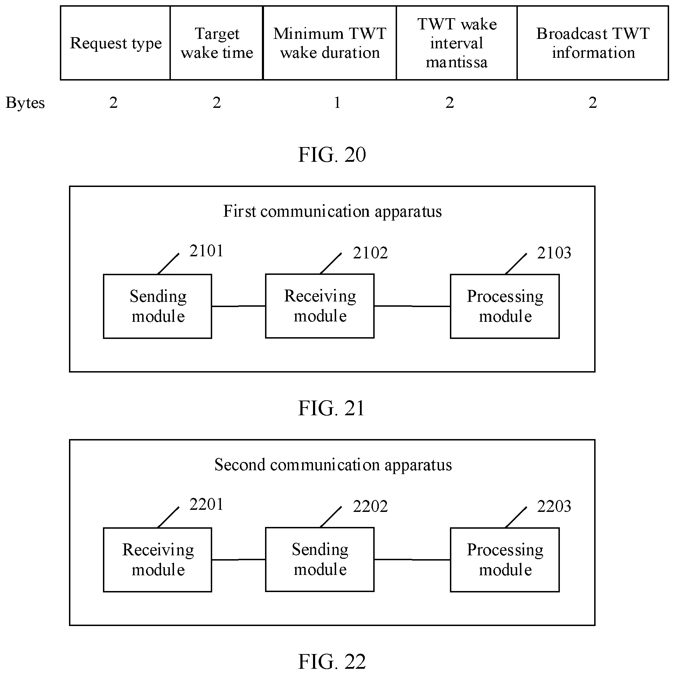

FIG. 18 is a schematic diagram of a TWT element used for TWT negotiation according to an embodiment of this application. The TWT element includes fields such as an element number field, a length field, a control field and a TWT parameter information field. The control field includes fields such as an NDP paging indication field, a responder power saving mode field, a negotiation type field, and a TWT information frame disabled field. A negotiation type may include a single-user TWT type and a broadcast TWT type. FIG. 19 is a schematic diagram of the single-user TWT type according to an embodiment of this application. When the negotiation type indicates the single-user TWT type, an information field of a single-user TWT parameter includes a request type, target wake time, TWT group allocation, minimum TWT wake duration, TWT wake interval mantissa, a TWT channel, NDP (Null data packet, null data packet) paging, and the like. FIG. 20 is a schematic diagram of the broadcast TWT type according to an embodiment of this application. When the negotiation type indicates the broadcast TWT type, an information field of a broadcast TWT parameter includes a request type, target wake time, TWT group allocation, minimum TWT wake duration, TWT wake interval mantissa, a TWT channel, and NDP (Null data packet, null data packet) paging. The request type field includes an indication field of a TWT wake interval, and TWT wake interval = TWT wake interval mantissa * 2 (TWT wake interval exponent).

A multi-link indication may be added to the control field of the TWT element, where the multi-link indication is used to indicate that the broadcast TWT parameter information or the single-user TWT parameter information may be applied to another link different from the link used to transmit the TWT element. A link to which the information is specifically applied may be indicated in the following manner:
For single-user TWT:
In a first optional manner, an operating class (operating class) field is added to the information field of the single-user TWT parameter, to indicate a link, in the multiple links, in which a TWT element is used with reference to the operating class field and the TWT channel field.

In a second optional manner, one or more link sequence numbers are added to the information field of the single-user TWT parameter and the information field of the broadcast TWT parameter, where the link sequence numbers are used to indicate a link, in the multiple links, in which the TWT element is used.

Alternatively, a link sequence number bitmap is used to indicate a link, in the multiple links, in which the TWT element is used. For example, if the link sequence number bitmap is 0100, that the 2^{nd} bit is set to 1 may indicate that the TWT element may be used in the 2nd link.

For broadcast TWT:
In a first optional manner, an operating class (operating class) field and the TWT channel field are added to the information field of the broadcast TWT parameter, to indicate a link, in the multiple links, in which the TWT element is used.

In a second optional manner, one or more link sequence numbers are added to the information field of the broadcast TWT parameter, where the link sequence numbers are used to indicate a link, in the multiple links, in which the TWT element is used. Alternatively, a link sequence number bitmap is used to indicate a link, in the multiple links, in which the TWT element is used. For example, if the link sequence number bitmap is 0100, that the 2^{nd} bit is set to 1 may indicate that the TWT element may be used in the 2^{nd} link.

In this embodiment of this application, the first device indicates the primary link in the multiple links to the second device, and indicates the working state or the sleep state of the multiple links over the primary link, or performs TWT negotiation over the primary link, to save power.

The foregoing describes in detail the method in the embodiments of this application. The following provides apparatuses in the embodiments of this application.

FIG. 21 is a schematic structural diagram of a first communication apparatus according to an embodiment of this application. The first communication apparatus may include a sending module 2101, a receiving module 2102, and a processing module 2103. Detailed descriptions of the modules are as follows:

The sending module 2101 is configured to send an ADDBA request frame to a second device, where the ADDBA request frame includes a reference value of at least one first buffer size field and a reference value of one second buffer size field, and the second device and a first device are multi-link entities including one or more links.

The receiving module 2102 is configured to receive an ADDBA response frame sent by the second device, where the ADDBA response frame includes an acknowledgment value of the at least one first buffer size field and an acknowledgment value of the second buffer size field.

The processing module 2103 is configured to establish a multi-link block acknowledgment session between multiple links of the first device and multiple links of the second device based on the ADDBA request frame and the ADDBA response frame.

One first buffer size field is used to indicate a size of a local buffer space corresponding to one link in the multiple links of the first device and the multiple links of the second device, and the second buffer size field is used to indicate a size of a global buffer space maintained by the first device and the second device.

Optionally, the processing module 2103 is configured to maintain multiple first send windows and one second send window based on the ADDBA request frame and the ADDBA response frame, where the multiple first send windows are corresponding to the multiple links of the first device, and the second send window is corresponding to the multi-link entity of the first device.

One of the first send windows is corresponding to one link in the multiple links, a starting sequence number of the first send window is WinStartO1, an end sequence number is WinEndO1, and a window size is WinSizeO1, where WinSizeO1 is equal to the acknowledgment value of the first buffer size field corresponding to the link.

A starting sequence number of the second send window is WinStartO2, an end sequence number is WinEndO2, and a window size is WinSizeO2, where WinSizeO2 is equal to the acknowledgment value that is of the second buffer size field and that is negotiated by using the ADDBA request frame and the ADDBA response frame.

The processing module is configured to maintain multiple first send windows and one second send window based on the ADDBA request frame and the ADDBA response frame, where the multiple first send windows are corresponding to the multiple links of the first device, and the second send window is corresponding to the multi-link entity of the first device.

One of the first send windows is corresponding to one link in the multiple links, a starting sequence number of the first send window is WinStartO1, an end sequence number is WinEndO1, and a window size is WinSizeO1, where WinSizeO1 is equal to the acknowledgment value of the first buffer size corresponding to the link.

A starting sequence number of the second send window is WinStartO2, an end sequence number is WinEndO2, and a window size is WinSizeO2, where WinSizeO2 is equal to the acknowledgment value that is of the second buffer size and that is negotiated by using the ADDBA request frame and the ADDBA response frame.

The ADDBA request frame includes a first block acknowledgment starting sequence control field and a second block acknowledgment starting sequence control field.

The first block acknowledgment starting sequence control field is used to indicate a first initial sequence number of a starting sequence number of a first scoreboard of the link of the second device, and a type of the first initial sequence number is a local sequence number.

The second block acknowledgment starting sequence control field is used to indicate a second initial sequence number of a starting sequence number of a second scoreboard of the multi-link entity of the second device, and a type of the second initial sequence number is a global sequence number.

The ADDBA request frame includes at least one of a link bitmap field and the reference value of the at least one first buffer size field, or at least one of a link quantity field, a multi-link identity number field, and the reference value of the at least one first buffer size field. The ADDBA response frame includes at least one of a link bitmap field and the acknowledgment value of the at least one first buffer size field, or at least one of a link quantity field, a multi-link identity number field, and the acknowledgment value of the at least one first buffer size field.

The ADDBA request frame includes a first block acknowledgment parameter set field, and the first block acknowledgment parameter set field includes the reference value of the second buffer size field.

The ADDBA response frame includes a second block acknowledgment parameter set field, and the second block acknowledgment parameter set field includes the acknowledgment value of the second buffer size field.

Optionally, the sending module 2101 is configured to send a data packet to the second device, and the receiving module 2102 is configured to receive an acknowledgment message returned by the second device in response to the data packet.

The data packet includes a local sequence number and a global sequence number, where the local sequence number is an identifier allocated to the data packet by a link that is in the multiple links and that sends the data packet, and the global sequence number is an identifier allocated to the data packet by the multi-link entity.

Optionally, the sending module 2101 is further configured to send a block acknowledgment request frame or a multi-user block acknowledgment request trigger frame to the second device, where the block acknowledgment request frame or the multi-user block acknowledgment request trigger frame includes a starting sequence control field, and the starting sequence control field includes a starting sequence number.

The block acknowledgment request frame or the multi-user block acknowledgment request trigger frame further includes first indication information, where the first indication information is used to indicate a type of the starting sequence number, and the type of the starting sequence number includes a local sequence number or a global sequence number.

The receiving module 2202 is further configured to receive a block acknowledgment frame sent by the second device, where the block acknowledgment frame includes the starting sequence control field, the starting sequence control field includes the starting sequence number and a block acknowledgment bitmap, and the block acknowledgment bitmap is used to indicate a receiving status of the data packet received by the second device.

The block acknowledgment frame further includes a block acknowledgment BA control field, where the BA control field includes the second indication information, the second indication information is used to indicate the type of the starting sequence number, the type of the starting sequence number is the local sequence number or the global sequence number, and a first bit in the block acknowledgment bitmap is corresponding to the starting sequence number.

In another embodiment:
The sending module 2101 is configured to send a message frame to a second device, where the message frame includes first indication information, and the first indication information is used to indicate a primary link in multiple links. The sending module 2101 is configured to: send second indication information to the second device over the primary link, where the second indication information indicates a working state or a sleep state of the multiple links; or perform TWT negotiation with the second device over the primary link.

The first indication information is a special element. The first device may send the message frame to the second device over the primary link, where the message frame may carry one special element, and the special element is carried only in the message frame sent over the primary link. The special element is used to indicate that a link over which the message frame is transmitted is a primary link. The primary link is indicated by using the special element, so that another link is in a sleep state or a disabled state, and power is reduced.

The first indication information is a link sequence number. The first device may send the message frame to the second device over a non-primary link, where the message frame may carry a reduced neighbor report element or a multi-band element, and the reduced neighbor report element or the multi-band element includes the link sequence number. The link sequence number is used to indicate the primary link of the multiple links.

An operating class field is added to an information field of a single-user TWT parameter and an information field of a broadcast TWT parameter, to indicate a link, in the multiple links, in which a TWT element is used with reference to the operating class field and a TWT channel field. An indication value may be added to the information field of the broadcast TWT parameter, and the indication value is used to indicate a link, in the multiple links, in which the TWT element is used.

One or more link sequence numbers are added to an information field of a single-user TWT parameter and an information field of a broadcast TWT parameter, where the link sequence numbers are used to indicate a link, in the multiple links, in which the TWT element is used. Alternatively, a link sequence number bitmap is used to indicate a link, in the multiple links, in which the TWT element is used.

It should be noted that, for implementation of each module, refer to corresponding descriptions of the method embodiments shown in FIG. 6 and FIG. 17. The module performs the methods and the functions performed by the first device in the foregoing embodiments.

FIG. 22 is a schematic structural diagram of a second communication apparatus according to an embodiment of this application. The second communication apparatus includes a receiving module 2201, a sending module 2202, and a processing module 2203. Detailed descriptions of the modules are as follows:

The receiving module 2201 is configured to receive an ADDBA request frame sent by a first device, where the ADDBA request frame includes a reference value of at least one first buffer size field and a reference value of one second buffer size field, and the first device and a second device are multi-link entities including one or more links.

The sending module 2202 is configured to send an ADDBA response frame to the first device, where the ADDBA response frame includes an acknowledgment value of the at least one first buffer size field and an acknowledgment value of the second buffer size field.

The processing module 2203 is configured to establish a multi-link block acknowledgment session between multiple links of the first device and multiple links of the second device based on the ADDBA request frame and the ADDBA response frame.

One first buffer size field is used to indicate a size of a local buffer space corresponding to one link in the multiple links of the first device and the multiple links of the second device, and the second buffer size field is used to indicate a size of a global buffer space maintained by the first device and the second device.

The processing module 2203 is configured to maintain a receive window based on the ADDBA request frame and the ADDBA response frame, where the receive window is corresponding to the link entity of the second device.

A starting sequence number of the receive window is WinStartB2, an end sequence number is WinEndB2, and a window size is WinSizeB2, where WinSizeB2 is equal to the smaller value between the acknowledgment value of the second buffer size field and a block acknowledgment bitmap of a maximum length.

The ADDBA request frame includes a first block acknowledgment starting sequence control field and a second block acknowledgment starting sequence control field.

The first block acknowledgment starting sequence control field is used to indicate a first initial sequence number of a starting sequence number of a first scoreboard of the link of the second device, and a type of the first initial sequence number is a local sequence number.

The second block acknowledgment starting sequence control field is used to indicate a second initial sequence number of a starting sequence number of a second scoreboard of the multi-link entity of the second device, and a type of the second initial sequence number is a global sequence number.

The ADDBA request frame includes at least one of a link bitmap field and the reference value of the at least one first buffer size field, or at least one of a link quantity field, a multi-link identity number field, and the reference value of the at least one first buffer size field.

The ADDBA response frame includes at least one of a link bitmap field and the acknowledgment value of the at least one first buffer size field, or at least one of a link quantity field, a multi-link identity number field, and the acknowledgment value of the at least one first buffer size field.

The ADDBA request frame includes a first block acknowledgment parameter set field, and the first block acknowledgment parameter set field includes the reference value of the second buffer size field.

The ADDBA response frame includes a second block acknowledgment parameter set field, and the second block acknowledgment parameter set field includes the acknowledgment value of the second buffer size field.

Optionally, the receiving module 2201 is further configured to receive a data packet sent by the first device. The sending module 2202 is further configured to send an acknowledgment message in response to the data packet to the first device.

The data packet includes a local sequence number and a global sequence number, where the local sequence number is an identifier allocated to the data packet by a link that is in the multiple links and that sends the data packet, and the global sequence number is an identifier allocated to the data packet by the multi-link entity.

Optionally, the receiving module 2201 is further configured to receive a block acknowledgment request frame or a multi-user block acknowledgment request trigger frame sent by the first device, where the block acknowledgment request frame or the multi-user block acknowledgment request trigger frame includes a starting sequence control field, and the starting sequence control field includes a starting sequence number.

The block acknowledgment request frame or the multi-user block acknowledgment request trigger frame further includes first indication information, the first indication information is used to indicate a type of the starting sequence number, and the type of the starting sequence number includes a local sequence number or a global sequence number.

The processing module 2203 is further configured to maintain multiple first scoreboards and one second scoreboard, where the multiple first scoreboards are corresponding to the multiple links, and the second scoreboard is corresponding to the multi-link entity.

A starting sequence number of one of the first scoreboards is WinStartR1, an end sequence number is WinEndR1, and a scoreboard size WinSizeR1 is equal to the smaller value between an acknowledgment value of the first buffer size field corresponding to a link corresponding to the first scoreboard and a block acknowledgment bitmap of a maximum length.

A starting sequence number of the second scoreboard is WinStartR2, an end sequence number is WinEndR2, and a scoreboard size is WinSizeR2, where WinSizeR2 is equal to the smaller value between the acknowledgment value of the second buffer size field and the block acknowledgment bitmap of the maximum length.

The acknowledgment message is a block acknowledgment frame.

The block acknowledgment frame includes the starting sequence control field, the starting sequence control field includes the starting sequence number and a block acknowledgment bitmap, and the block acknowledgment bitmap is used to indicate a receiving status of the data packet received by the second device.

The block acknowledgment frame further includes a block acknowledgment BA control field, where the BA control field includes the second indication information, the second indication information is used to indicate the type of the starting sequence number, the type of the starting sequence number is the local sequence number or the global sequence number, and a first bit in the block acknowledgment bitmap is corresponding to the starting sequence number.

If a sequence corresponding to the block acknowledgment bitmap is the local sequence number, a sequence number corresponding to the first bit in the block acknowledgment bitmap is WinStartR1.

If a sequence corresponding to the block acknowledgment bitmap is the global sequence number, a sequence number corresponding to the first bit in the block acknowledgment bitmap is WinStartR2.

In another embodiment:
The receiving module 2101 is configured to receive a message frame sent by a first device, where the message frame includes first indication information, and the first indication information is used to indicate a primary link in multiple links. The receiving module 2201 is configured to: receive second indication information sent by the first device over the primary link, where the second indication information indicates a working state or a sleep state of the multiple links; or perform TWT negotiation with the first device over the primary link.

The first indication information is a special element. The second device may receive the message frame sent by the first device over the primary link, where the message frame may carry one special element, and the special element is carried only in the message frame sent over the primary link. The special element is used to indicate that a link over which the message frame is transmitted is a primary link.

The first indication information is a link sequence number. The second device may receive the message frame sent by the first device over a non-primary link, where the message frame may carry a reduced neighbor report element or a multi-band element, and the reduced neighbor report element or the multi-band element includes the link sequence number. The link sequence number is used to indicate the primary link of the multiple links.

It should be noted that, for implementation of each module, refer to corresponding descriptions of the method embodiments shown in FIG. 6 and FIG. 17. The module performs the methods and the functions performed by the second device in the foregoing embodiments.

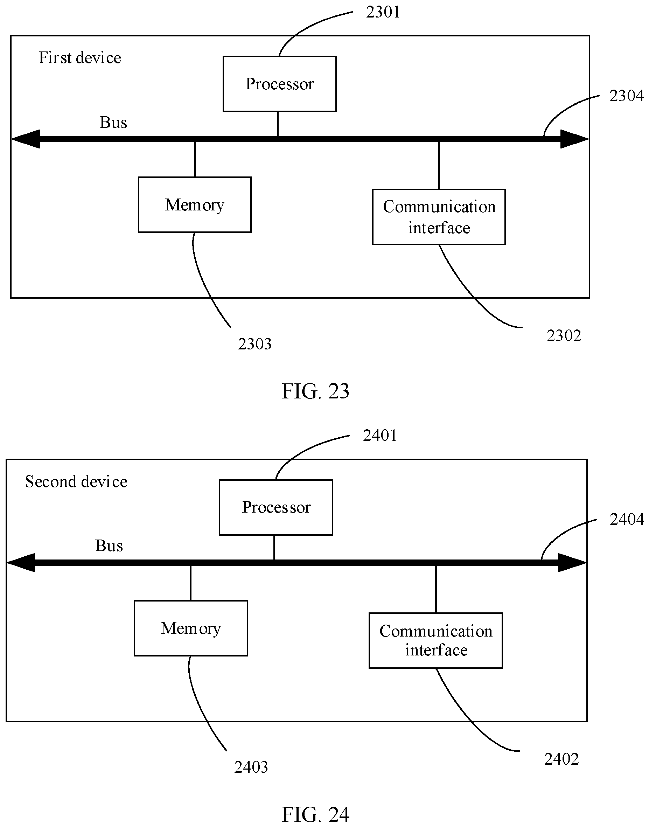

FIG. 23 is a schematic diagram of a structure of a first device according to an embodiment of this application. As shown in FIG. 23, the first device may include at least one processor 2301, at least one communication interface 2302, at least one memory 2303, and at least one communication bus 2304.

The processor 2301 may be a central processing unit, a general-purpose processor, a digital signal processor, an application-specific integrated circuit, a field programmable gate array or another programmable logic device, a transistor logic device, a hardware component, or any combination thereof. The processor 2301 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication bus 2304 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 23, but this does not mean that there is only one bus or only one type of bus. The communication bus 2304 is configured to implement connection and communication between these components. The communication interface 2302 in the device in this embodiment of this application is configured to perform signaling or data communication with another node device. The memory 2303 may include a volatile memory, for example, a nonvolatile random access memory (nonvolatile random-access memory, NVRAM), a phase-change random-access memory (phase-change RAM, PRAM), or a magnetoresistive random-access memory (magnetoresistive RAM, MRAM). The memory 2303 may further include a nonvolatile memory, for example, at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid-state drive (solid-state drive, SSD). Optionally, the memory 2303 may alternatively be at least one storage apparatus far away from the processor 2301. Optionally, the memory 2303 may further store a group of program code, and optionally, the processor 2301 may further execute a program executed in the memory 2303.

The communication interface 2302 sends an ADDBA request frame to a second device, where the ADDBA request frame includes a reference value of at least one first buffer size field and a reference value of one second buffer size field, and the first device and a second device are multi-link entities including one or more links.

The communication interface 2302 receives an ADDBA response frame sent by the second device, where the ADDBA response frame includes an acknowledgment value of the at least one first buffer size field and an acknowledgment value of the second buffer size field.

The communication interface 2302 establishes a multi-link block acknowledgment session between multiple links of the first device and multiple links of the second device based on the ADDBA request frame and the ADDBA response frame.

One first buffer size field is used to indicate a size of a local buffer space corresponding to one link in the multiple links of the first device and the multiple links of the second device, and the second buffer size field is used to indicate a size of a global buffer space maintained by the first device and the second device.

Optionally, the processor 2301 is further configured to perform the following operations:
The first device maintains multiple first send windows and one second send window based on the ADDBA request frame and the ADDBA response frame, where the multiple first send windows are corresponding to the multiple links of the first device, and the second send window is corresponding to the multi-link entity of the first device.

One of the first send windows is corresponding to one link in the multiple links, a starting sequence number of the first send window is WinStartO1, an end sequence number is WinEndO1, and a window size is WinSizeO1, where WinSizeO1 is equal to the acknowledgment value of the first buffer size corresponding to the link.

A starting sequence number of the second send window is WinStart02, an end sequence number is WinEndO2, and a window size is WinSizeO2, where WinSizeO2 is equal to the acknowledgment value that is of the second buffer size and that is negotiated by using the ADDBA request frame and the ADDBA response frame.

The ADDBA request frame includes at least one first block acknowledgment starting sequence control field and a second block acknowledgment starting sequence control field.

The first block acknowledgment starting sequence control field is used to indicate a first initial sequence number of a starting sequence number of a first scoreboard of the link of the second device, and a type of the first initial sequence number is a local sequence number.

The second block acknowledgment starting sequence control field is used to indicate a second initial sequence number of a starting sequence number of a second scoreboard of the multi-link entity of the second device, and a type of the second initial sequence number is a global sequence number.

The ADDBA request frame includes at least one of a link bitmap field and the reference value of the at least one first buffer size field, or at least one of a link quantity field, a multi-link identity number field, and the reference value of the at least one first buffer size field.

The ADDBA response frame includes at least one of a link bitmap field and the acknowledgment value of the at least one first buffer size field, or at least one of a link quantity field, a multi-link identity number field, and the acknowledgment value of the at least one first buffer size field.

The ADDBA request frame includes a first block acknowledgment parameter set field, and the first block acknowledgment parameter set field includes the reference value of the second buffer size field.

The ADDBA response frame includes a second block acknowledgment parameter set field, and the second block acknowledgment parameter set field includes the acknowledgment value of the second buffer size field.

Optionally, the processor 2301 is further configured to perform the following operations:
The communication interface 2302 sends a data packet to the second device.

The communication interface 2302 receives an acknowledgment message returned by the second device in response to the data packet.

The data packet includes a local sequence number and a global sequence number, where the local sequence number is an identifier allocated to the data packet by a link that is in the multiple links and that sends the data packet, and the global sequence number is an identifier allocated to the data packet by the multi-link entity.

Optionally, the processor 2301 is further configured to perform the following operations:
The communication interface 2302 sends a block acknowledgment request frame or a multi-user block acknowledgment request trigger frame to the second device, where the block acknowledgment request frame or the multi-user block acknowledgment request trigger frame includes a starting sequence control field, and the starting sequence control field includes a starting sequence number.

The block acknowledgment request frame or the multi-user block acknowledgment request trigger frame further includes first indication information, where the first indication information is used to indicate a type of the starting sequence number, and the type of the starting sequence number includes a local sequence number or a global sequence number.

Optionally, the processor 2301 is further configured to perform the following operations:
receiving a block acknowledgment frame sent by the second device, where the block acknowledgment frame includes the starting sequence control field, the starting sequence control field includes the starting sequence number and a block acknowledgment bitmap, and the block acknowledgment bitmap is used to indicate a receiving status of the data packet received by the second device.

The block acknowledgment frame further includes a block acknowledgment BA control field, where the BA control field includes the second indication information, the second indication information is used to indicate the type of the starting sequence number, the type of the starting sequence number is the local sequence number or the global sequence number, and a first bit in the block acknowledgment bitmap is corresponding to the starting sequence number.

In another embodiment:
A message frame is sent to a second device through the communication interface 2302, where the message frame includes first indication information, and the first indication information is used to indicate a primary link in multiple links. Second indication information is sent to the second device over the primary link, where the second indication information indicates working states or sleep states of the multiple links; or TWT negotiation is performed with the second device over the primary link.

The first indication information is a special element. The first device may send the message frame to the second device over the primary link, where the message frame may carry one special element, and the special element is carried only in the message frame sent over the primary link. The special element is used to indicate that a link over which the message frame is transmitted is a primary link. The primary link is indicated by using the special element, so that another link is in a sleep state or a disabled state, and power is reduced.

The first indication information is a link sequence number. The first device may send the message frame to the second device over a non-primary link, where the message frame may carry a reduced neighbor report element or a multi-band element, and the reduced neighbor report element or the multi-band element includes the link sequence number. The link sequence number is used to indicate the primary link of the multiple links.

An operating class field is added to an information field of a single-user TWT parameter and an information field of a broadcast TWT parameter, to indicate a link, in the multiple links, in which a TWT element is used with reference to the operating class field and a TWT channel field. An indication value may be added to the information field of the broadcast TWT parameter, and the indication value is used to indicate a link, in the multiple links, in which the TWT element is used.

One or more link sequence numbers are added to an information field of a single-user TWT parameter and an information field of a broadcast TWT parameter, where the link sequence numbers are used to indicate a link, in the multiple links, in which the TWT element is used. Alternatively, a link sequence number bitmap is used to indicate a link, in the multiple links, in which the TWT element is used.

Further, the processor may further cooperate with the memory and the communication interface to perform operations of the first device in the foregoing embodiments of this application.

FIG. 24 is a schematic diagram of a structure of a second device according to an embodiment of this application. As shown in the figure, the second device may include at least one processor 2401, at least one communication interface 2402, at least one memory 2403, and at least one communication bus 2404.

The processor 2401 may be processors of various types that are mentioned above. The communication bus 2404 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 24, but this does not mean that there is only one bus or only one type of bus. The communication bus 2404 is configured to implement connection and communication between these components. The communication interface 2402 in the device in this embodiment of this application is configured to perform signaling or data communication with another node device. The memory 2403 may be memories of various types mentioned above. Optionally, the memory 2403 may alternatively be at least one storage apparatus far away from the processor 2401. The memory 2403 stores a group of program code, and the processor 2401 executes a program that is in the memory 2403 and that is executed by the OAM.

An ADDBA request frame sent by a first device is received through the communication interface 2402, where the ADDBA request frame includes a reference value of at least one first buffer size field and a reference value of one second buffer size field, and the first device and a second device are multi-link entities including one or more links.

An ADDBA response frame is sent to the first device through the communication interface 2402, where the ADDBA response frame includes multiple acknowledgment values of the first buffer size field and an acknowledgment value of the second buffer size field.

A multi-link block acknowledgment session is established between multiple links of the first device and multiple links of the second device based on the ADDBA request frame and the ADDBA response frame.

One first buffer size field is used to indicate a size of a local buffer space corresponding to one link in the multiple links of the first device and the multiple links of the second device, and the second buffer size field is used to indicate a size of a global buffer space maintained by the first device and the second device.

Optionally, the processor 2401 is further configured to perform the following operations:
The second device maintains a receive window based on the ADDBA request frame and the ADDBA response frame, where the receive window is corresponding to the link entity of the second device.

A starting sequence number of the receive window is WinStartB2, an end sequence number is WinEndB2, and a window size is WinSizeB2, where WinSizeB2 is equal to the smaller value between the acknowledgment value of the second buffer size field and a block acknowledgment bitmap of a maximum length.

Optionally, the processor 2401 is further configured to perform the following operations:

The second device maintains multiple first receive windows and one second receive window based on the ADDBA request frame and the ADDBA response frame, where the multiple first receive windows are corresponding to the multiple links of the second device, and the second receive window is corresponding to the link entity of the second device.

The ADDBA request frame includes a first block acknowledgment starting sequence control field and a second block acknowledgment starting sequence control field.

The first block acknowledgment starting sequence control field is used to indicate a first initial sequence number of a starting sequence number of a first scoreboard of the link of the second device, and a type of the first initial sequence number is a local sequence number.

The second block acknowledgment starting sequence control field is used to indicate a second initial sequence number of a starting sequence number of a second scoreboard of the multi-link entity of the second device, and a type of the second initial sequence number is a global sequence number.

The ADDBA request frame includes at least one of a link bitmap field and the reference value of the at least one first buffer size field, or at least one of a link quantity field, a multi-link identity number field, and the reference value of the at least one first buffer size field.

The ADDBA response frame includes at least one of a link bitmap field and the acknowledgment value of the at least one first buffer size field, or at least one of a link quantity field, a multi-link identity number field, and the acknowledgment value of the at least one first buffer size field.

The ADDBA request frame includes a first block acknowledgment parameter set field, and the first block acknowledgment parameter set field includes the reference value of the second buffer size field.

The ADDBA response frame includes a second block acknowledgment parameter set field, and the second block acknowledgment parameter set field includes the acknowledgment value of the second buffer size field.

Optionally, the processor 2401 is further configured to perform the following operations:
receiving, through the communication interface 2402, a data packet sent by the first device; and
sending an acknowledgment message through the communication interface 2402 in response to the data packet to the first device.

The data packet includes a local sequence number and a global sequence number, where the local sequence number is an identifier allocated to the data packet by a link that is in the multiple links and that sends the data packet, and the global sequence number is an identifier allocated to the data packet by the multi-link entity.

Optionally, the processor 2401 is further configured to perform the following operations:
receiving, through the communication interface 2402, a block acknowledgment request frame or a multi-user block acknowledgment request trigger frame sent by the first device, where the block acknowledgment request frame or the multi-user block acknowledgment request trigger frame includes a starting sequence control field, and the starting sequence control field includes a starting sequence number.

The block acknowledgment request frame or the multi-user block acknowledgment request trigger frame further includes first indication information, where the first indication information is used to indicate a type of the starting sequence number, and the type of the starting sequence number includes a local sequence number or a global sequence number.

Optionally, the processor 2401 is further configured to perform the following operations:
maintaining multiple first scoreboards and one second scoreboard, where the multiple first scoreboards are corresponding to the multiple links, and the second scoreboard is corresponding to the multi-link entity.

A starting sequence number of one of the first scoreboards is WinStartR1, an end sequence number is WinEndR1, and a scoreboard size WinSizeR1 is equal to the smaller value between an acknowledgment value of the first buffer size field corresponding to a link corresponding to the first scoreboard and a block acknowledgment bitmap of a maximum length.

A starting sequence number of the second scoreboard is WinStartR2, an end sequence number is WinEndR2, and a scoreboard size is WinSizeR2, where WinSizeR2 is equal to the smaller value between the acknowledgment value of the second buffer size and the block acknowledgment bitmap of the maximum length.

The acknowledgment message is a block acknowledgment frame.

The block acknowledgment frame includes the starting sequence control field, the starting sequence control field includes the starting sequence number and a block acknowledgment bitmap, and the block acknowledgment bitmap is used to indicate a receiving status of the data packet received by the second device.

The block acknowledgment frame further includes a block acknowledgment BA control field, where the BA control field includes the second indication information, the second indication information is used to indicate the type of the starting sequence number, the type of the starting sequence number is the local sequence number or the global sequence number, and a first bit in the block acknowledgment bitmap is corresponding to the starting sequence number.

If a sequence corresponding to the block acknowledgment bitmap is the local sequence number, a sequence number corresponding to the first bit in the block acknowledgment bitmap is WinStartR1.

If a sequence corresponding to the block acknowledgment bitmap is the global sequence number, a sequence number corresponding to the first bit in the block acknowledgment bitmap is WinStartR2.

In another embodiment:
A message frame sent by a first device is received through the communication interface 2402, where the message frame includes first indication information, and the first indication information is used to indicate a primary link in multiple links. Second indication information sent by the first device over the primary link is received through the communication interface 2402, where the second indication information indicates working states or sleep states of the multiple links; or TWT negotiation is performed with the first device over the primary link.

The first indication information is a special element. The second device may receive the message frame sent by the first device over the primary link, where the message frame may carry one special element, and the special element is carried only in the message frame sent over the primary link. The special element is used to indicate that a link over which the message frame is transmitted is a primary link.

The first indication information is a link sequence number. The second device may receive the message frame sent by the first device over a non-primary link, where the message frame may carry a reduced neighbor report element or a multi-band element, and the reduced neighbor report element or the multi-band element includes the link sequence number. The link sequence number is used to indicate the primary link of the multiple links.

Further, the processor may further cooperate with the memory and the communication interface to perform operations of the second device in the foregoing embodiments of this application.

An embodiment of this application further provides a chip system. The chip system includes a processor, configured to support a first device or a second device to implement a function in any one of the foregoing embodiments, for example, generating or processing data and/or information in the foregoing method. In a possible design, the chip system may further include a memory, and the memory is used for program instructions and data that are necessary for the first device or the second device. The chip system may include a chip, or may include a chip and another discrete device.

An embodiment of this application further provides a processor, configured to be coupled to a memory, and configured to perform any method and function related to the first device or the second device in any one of the foregoing embodiments.

An embodiment of this application further provides a computer program product including instructions. When the computer program product runs on a computer, the computer is enabled to perform any method and function related to the first device or the second device in any one of the foregoing embodiments.

An embodiment of this application further provides an apparatus, configured to perform any method and function related to the first device or the second device in any one of the foregoing embodiments.

An embodiment of this application further provides a wireless communication system. The system includes at least one first device and at least one second device in any one of the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

## Claims

1. A multi-link communication method, comprising:
sending, S601, by a first device, an add block acknowledgment, ADDBA, request frame to a second device, wherein the ADDBA request frame comprises a reference value of at least one first buffer size field and a reference value of one second buffer size field, and the first device and the second device are multi-link entities comprising one or more links;
receiving, S602, by the first device, an ADDBA response frame sent by the second device, wherein the ADDBA response frame comprises an acknowledgment value of the at least one first buffer size field and an acknowledgment value of the second buffer size field; and
establishing, by the first device, a multi-link block acknowledgment session between multiple links of the first device and multiple links of the second device based on the ADDBA request frame and the ADDBA response frame, wherein
one first buffer size field is used to indicate a size of a local buffer space corresponding to one link in the multiple links of the first device and the multiple links of the second device, and the second buffer size field is used to indicate a size of a global buffer space maintained by the first device and the second device, wherein the method further comprises:
maintaining, by the first device, multiple first send windows and one second send window based on the ADDBA request frame and the ADDBA response frame, wherein the multiple first send windows are corresponding to the multiple links of the first device, and the second send window is corresponding to the multi-link entity of the first device, wherein
one of the first send windows is corresponding to one link in the multiple links, a starting sequence number of the first send window is WinStartO1, an end sequence number is WinEndO1, and a window size is WinSizeO1, wherein WinSizeO1 is equal to the acknowledgment value of the first buffer size corresponding to the link; and
a starting sequence number of the second send window is WinStartO2, an end sequence number is WinEndO2, and a window size is WinSizeO2, wherein WinSizeO2 is equal to the acknowledgment value that is of the second buffer size and that is negotiated by using the ADDBA request frame and the ADDBA response frame.

2. The method according to claim 1, wherein the ADDBA request frame comprises at least one first block acknowledgment starting sequence control field and a second block acknowledgment starting sequence control field;
the first block acknowledgment starting sequence control field is used to indicate an initial value of a first initial sequence number of a starting sequence number of a first scoreboard of the link of the second device, and a type of the first initial sequence number is a local sequence number; and
the second block acknowledgment starting sequence control field is used to indicate an initial value of a second initial sequence number of a starting sequence number of a second scoreboard of the multi-link entity of the second device, and a type of the second initial sequence number is a global sequence number.

3. The method according to any one of claims 1 to 2, wherein
the ADDBA request frame comprises at least one of a link bitmap field and the reference value of the at least one first buffer size field, or at least one of a link quantity field, a multi-link identity number field, and the reference value of the at least one first buffer size field;
the ADDBA response frame comprises at least one of a link bitmap field and the acknowledgment value of the at least one first buffer size field, or at least one of a link quantity field, a multi-link identity number field, and the acknowledgment value of the at least one first buffer size field;
the ADDBA request frame comprises a first block acknowledgment parameter set field, and the first block acknowledgment parameter set field comprises the reference value of the second buffer size field; and
the ADDBA response frame comprises a second block acknowledgment parameter set field, and the second block acknowledgment parameter set field comprises the acknowledgment value of the second buffer size field.

4. The method according to any one of claims 1 to 3, wherein the method further comprises:
sending, by the first device, a data packet to the second device; and
receiving, by the first device, an acknowledgment message returned by the second device in response to the data packet, wherein
the data packet comprises a local sequence number and a global sequence number, wherein the local sequence number is an identifier allocated to the data packet by a link that is in the multiple links and that sends the data packet, and the global sequence number is an identifier allocated to the data packet by the multi-link entity.

5. The method according to claim 4, wherein before the receiving, by the first device, an acknowledgment message returned by the second device in response to the data packet, the method further comprises:
sending, by the first device, a block acknowledgment request frame or a multi-user block acknowledgment request trigger frame to the second device, wherein the block acknowledgment request frame or the multi-user block acknowledgment request trigger frame comprises a starting sequence control field, and the starting sequence control field comprises a starting sequence number; and
the block acknowledgment request frame or the multi-user block acknowledgment request trigger frame further comprises first indication information, wherein the first indication information is used to indicate a type of the starting sequence number, and the type of the starting sequence number comprises a local sequence number or a global sequence number.

6. The method according to claim 4 or 5, wherein the receiving, by the first device, an acknowledgment message returned by the second device in response to the data packet comprises:
receiving, by the first device, a block acknowledgment frame sent by the second device, wherein the block acknowledgment frame comprises the starting sequence control field, the starting sequence control field comprises the starting sequence number and a block acknowledgment bitmap, and the block acknowledgment bitmap is used to indicate a receiving status of the data packet received by the second device; and
the block acknowledgment frame further comprises a block acknowledgment BA control field, wherein the BA control field comprises second indication information, the second indication information is used to indicate the type of the starting sequence number, the type of the starting sequence number is the local sequence number or the global sequence number, and a first bit in the block acknowledgment bitmap is corresponding to the starting sequence number.

7. A multi-link communication method, comprising:
receiving, S601, by a second device, an add block acknowledgment ADDBA request frame sent by a first device, wherein the ADDBA request frame comprises a reference value of at least one first buffer size field and a reference value of one second buffer size field, and the first device and the second device are multi-link entities comprising one or more links;
sending, S602, by the second device, an ADDBA response frame to the first device, wherein the ADDBA response frame comprises an acknowledgment value of the at least one first buffer size field and an acknowledgment value of the second buffer size field; and
establishing, by the second device, a multi-link block acknowledgment session between multiple links of the first device and multiple links of the second device based on the ADDBA request frame and the ADDBA response frame, wherein
one first buffer size field is used to indicate a size of a local buffer space corresponding to one link in the multiple links of the first device and the multiple links of the second device, and the second buffer size field is used to indicate a size of a global buffer space maintained by the first device and the second device, wherein the method further comprises:
maintaining, by the second device, a receive window based on the ADDBA request frame and the ADDBA response frame, wherein the receive window is corresponding to the link entity of the second device, wherein
a starting sequence number of the receive window is WinStartB2, an end sequence number is WinEndB2, and a window size is WinSizeB2, wherein WinSizeB2 is equal to the smaller value between the acknowledgment value of the second buffer size field and a block acknowledgment bitmap of a maximum length.

8. The method according to claim 7, wherein the ADDBA request frame comprises a first block acknowledgment starting sequence control field and a second block acknowledgment starting sequence control field;
the first block acknowledgment starting sequence control field is used to indicate a first initial sequence number of a starting sequence number of a first scoreboard of the link of the second device, and a type of the first initial sequence number is a local sequence number; and
the second block acknowledgment starting sequence control field is used to indicate a second initial sequence number of a starting sequence number of a second scoreboard of the multi-link entity of the second device, and a type of the second initial sequence number is a global sequence number.

9. The method according to any one of claims 7 to 8, wherein
the ADDBA request frame comprises at least one of a link bitmap field and the reference value of the at least one first buffer size field, or at least one of a link quantity field, a multi-link identity number field, and the reference value of the at least one first buffer size field;
the ADDBA response frame comprises at least one of a link bitmap field and the acknowledgment value of the at least one first buffer size field, or at least one of a link quantity field, a multi-link identity number field, and the acknowledgment value of the at least one first buffer size field;
the ADDBA request frame comprises a first block acknowledgment parameter set field, and the first block acknowledgment parameter set field comprises the reference value of the second buffer size field; and
the ADDBA response frame comprises a second block acknowledgment parameter set field, and the second block acknowledgment parameter set field comprises the acknowledgment value of the second buffer size field.

10. The method according to any one of claims 7 to 9, wherein the method further comprises:
receiving, by the second device, a data packet sent by the first device; and
sending, by the second device, an acknowledgment message in response to the data packet to the first device, wherein
the data packet comprises a local sequence number and a global sequence number, wherein the local sequence number is an identifier allocated to the data packet by a link that is in the multiple links and that sends the data packet, and the global sequence number is an identifier allocated to the data packet by the multi-link entity.

11. The method according to claim 10, wherein before the sending, by the second device, an acknowledgment message in response to the data packet to the first device, the method further comprises:
receiving, by the second device, a block acknowledgment request frame or a multi-user block acknowledgment request trigger frame sent by the first device, wherein the block acknowledgment request frame or the multi-user block acknowledgment request trigger frame comprises a starting sequence control field, and the starting sequence control field comprises a starting sequence number; and
the block acknowledgment request frame or the multi-user block acknowledgment request trigger frame further comprises first indication information, wherein the first indication information is used to indicate a type of the starting sequence number, and the type of the starting sequence number comprises a local sequence number or a global sequence number.

12. The method according to claim 7, wherein the method further comprises:
maintaining, by the second device, multiple first scoreboards and one second scoreboard, wherein the multiple first scoreboards are corresponding to the multiple links, and the second scoreboard is corresponding to the multi-link entity;
a starting sequence number of one of the first scoreboards is WinStartR1, an end sequence number is WinEndR1, and a scoreboard size WinSizeR1 is equal to the smaller value between an acknowledgment value of the first buffer size field corresponding to a link corresponding to the first scoreboard and a block acknowledgment bitmap of a maximum length; and
a starting sequence number of the second scoreboard is WinStartR2, an end sequence number is WinEndR2, and a scoreboard size is WinSizeR2, wherein WinSizeR2 is equal to the smaller value between the acknowledgment value of the second buffer size and the block acknowledgment bitmap of the maximum length.

13. The method according to claim 10 or 11, wherein the acknowledgment message is a block acknowledgment frame;
the block acknowledgment frame comprises the starting sequence control field, the starting sequence control field comprises the starting sequence number and a block acknowledgment bitmap, and the block acknowledgment bitmap is used to indicate a receiving status of the data packet received by the second device; and
the block acknowledgment frame further comprises a block acknowledgment BA control field, wherein the BA control field comprises second indication information, the second indication information is used to indicate the type of the starting sequence number, the type of the starting sequence number is the local sequence number or the global sequence number, and a first bit in the block acknowledgment bitmap is corresponding to the starting sequence number.

## Patentansprüche

1. Mehrfachverbindungskommunikationsverfahren, das umfasst:
Senden, S601, durch eine erste Vorrichtung, einen Add-Block-Acknowledgment-Anforderungsrahmen, ADDBA-Anforderungsrahmen, an eine zweite Vorrichtung, wobei der ADDBA-Anforderungsrahmen einen Referenzwert mindestens eines ersten Puffergrößenfelds und einen Referenzwert eines zweiten Puffergrößenfelds umfasst und die erste Vorrichtung und die zweite Vorrichtung Mehrfachverbindungsentitäten sind, die eine oder mehrere Verbindungen umfassen;
Empfangen, S602, durch die erste Vorrichtung, eines ADDBA-Antwortrahmens, der durch die zweite Vorrichtung gesendet wird, wobei der ADDBA-Antwortrahmen einen Quittungswert des mindestens einen ersten Puffergrößenfelds und einen Quittungswert des zweiten Puffergrößenfelds umfasst; und
Einrichten, durch die erste Vorrichtung, einer Mehrfachverbindungsblockquittungssitzung zwischen mehreren Verbindungen der ersten Vorrichtung und mehreren Verbindungen der zweiten Vorrichtung basierend auf dem ADDBA-Anforderungsrahmen und dem ADDBA-Antwortrahmen, wobei
ein erstes Puffergrößenfeld verwendet wird, um eine Größe eines lokalen Pufferraums, der einer Verbindung in den mehreren Verbindungen der ersten Vorrichtung und den mehreren Verbindungen der zweiten Vorrichtung entspricht, anzuzeigen, und das zweite Puffergrößenfeld verwendet wird, um eine Größe eines globalen Pufferraums, der durch die erste Vorrichtung und die zweite Vorrichtung aufrechterhalten wird, anzuzeigen, wobei das Verfahren ferner umfasst:
Aufrechterhalten, durch die erste Vorrichtung, mehrerer erster Sendefenster und eines zweiten Sendefensters basierend auf dem ADDBA-Anforderungsrahmen und dem ADDBA-Antwortrahmen, wobei die mehreren ersten Sendefenster den mehreren Verbindungen der ersten Vorrichtung entsprechen und das zweite Sendefenster der Mehrfachverbindungsentität der ersten Vorrichtung entspricht, wobei
eines der ersten Sendefenster einer Verbindung in den mehreren Verbindungen entspricht, eine Startsequenznummer des ersten Sendefensters WinStartO1 ist, eine Endsequenznummer WinEndO1 ist und eine Fenstergröße WinSizeO1 ist, wobei WinSizeO1 gleich dem Quittungswert der ersten Puffergröße, die der Verbindung entspricht, ist; und
eine Startsequenznummer des zweiten Sendefensters WinStartO2 ist, eine Endsequenznummer WinEndO2 ist und eine Fenstergröße WinSizeO2 ist, wobei WinSizeO2 gleich dem Quittungswert, der die zweite Puffergröße aufweist und der durch Verwenden des ADDBA-Anforderungsrahmens und des ADDBA-Antwortrahmens ausgehandelt wird, ist.

2. Verfahren nach Anspruch 1, wobei der ADDBA-Anforderungsrahmen mindestens ein erstes Blockquittungsstartsequenzsteuerfeld und ein zweites Blockquittungsstartsequenzsteuerfeld umfasst;
wobei das erste Blockquittungsstartsequenzsteuerfeld verwendet wird, um einen Anfangswert einer ersten Anfangssequenznummer einer Startsequenznummer eines ersten Scoreboards der Verbindung der zweiten Vorrichtung anzuzeigen, und eine Art der ersten Anfangssequenznummer eine lokale Sequenznummer ist; und
wobei das zweite Blockquittungsstartsequenzsteuerfeld verwendet wird, um einen Anfangswert einer zweiten Anfangssequenznummer einer Startsequenznummer eines zweiten Scoreboards der Mehrfachverbindungsentität der zweiten Vorrichtung anzuzeigen, und eine Art der zweiten Anfangssequenznummer eine globale Sequenznummer ist.

3. Verfahren nach einem der Ansprüche 1 bis 2, wobei
der ADDBA-Anforderungsrahmen mindestens eines von einem Verbindungs-Bitmap-Feld und dem Referenzwert des mindestens einen ersten Puffergrößenfelds oder mindestens eines von einem Verbindungsanzahlfeld, einem Mehrfachverbindungsidentitätsnummernfeld und dem Referenzwert des mindestens einen ersten Puffergrößenfelds umfasst;
der ADDBA-Antwortrahmen mindestens eines von einem Verbindungs-Bitmap-Feld und dem Quittungswert des mindestens einen ersten Puffergrößenfelds oder mindestens eines von einem Verbindungsanzahlfeld, einem Mehrfachverbindungsidentitätsnummernfeld und dem Quittungswert des mindestens einen ersten Puffergrößenfelds umfasst;
der ADDBA-Anforderungsrahmen ein erstes Blockquittungsparametersatzfeld umfasst und das erste Blockquittungsparametersatzfeld den Referenzwert des zweiten Puffergrößenfelds umfasst; und
der ADDBA-Antwortrahmen ein zweites Blockquittungsparametersatzfeld umfasst und das zweite Blockquittungsparametersatzfeld den Quittungswert des zweiten Puffergrößenfelds umfasst.

4. Verfahren nach einem der Ansprüche 1 bis 3, wobei das Verfahren ferner umfasst:
Senden, durch die erste Vorrichtung, eines Datenpakets an die zweite Vorrichtung; und
Empfangen, durch die erste Vorrichtung, einer Quittungsnachricht, die durch die zweite Vorrichtung als Reaktion auf das Datenpaket zurückgegeben wird, wobei
das Datenpaket eine lokale Sequenznummer und eine globale Sequenznummer umfasst, wobei die lokale Sequenznummer ein Bezeichner ist, der dem Datenpaket durch eine Verbindung, die sich in den mehreren Verbindungen befindet und die das Datenpaket sendet, zugewiesen wird, und die globale Sequenznummer ein Bezeichner, der dem Datenpaket durch die Mehrfachverbindungsentität zugewiesen wird, ist.

5. Verfahren nach Anspruch 4, wobei vor dem Empfangen, durch die erste Vorrichtung, einer Quittungsnachricht, die durch die zweite Vorrichtung als Reaktion auf das Datenpaket zurückgegeben wird, das Verfahren ferner umfasst:
Senden, durch die erste Vorrichtung, eines Blockquittungsanforderungsrahmens oder eines Mehrbenutzerblockquittungsanforderungsauslöserrahmens an die zweite Vorrichtung, wobei der Blockquittungsanforderungsrahmen oder der Mehrbenutzerblockquittungsanforderungsauslöserrahmen ein Startsequenzsteuerfeld umfasst und das Startsequenzsteuerfeld eine Startsequenznummer umfasst; und
wobei der Blockquittungsanforderungsrahmen oder der Mehrbenutzerblockquittungsanforderungsauslöserrahmen ferner erste Anzeigeinformationen umfasst, wobei die ersten Anzeigeinformationen verwendet werden, um eine Art der Startsequenznummer anzuzeigen, und die Art der Startsequenznummer eine lokale Sequenznummer oder eine globale Sequenznummer umfasst.

6. Verfahren nach Anspruch 4 oder 5, wobei das Empfangen, durch die erste Vorrichtung, einer Quittungsnachricht, die durch die zweite Vorrichtung als Reaktion auf das Datenpaket zurückgegeben wird, umfasst:
Empfangen, durch die erste Vorrichtung, eines Blockquittungsrahmens, der durch die zweite Vorrichtung gesendet wird, wobei der Blockquittungsrahmen das Startsequenzsteuerfeld umfasst, das Startsequenzsteuerfeld die Startsequenznummer und eine Blockquittungs-Bitmap umfasst und die Blockquittungs-Bitmap verwendet wird, um einen Empfangsstatus des Datenpakets, das durch die zweite Vorrichtung empfangen wird, anzuzeigen; und
wobei der Blockquittungsrahmen ferner ein Blockquittungssteuerfeld, BA-Steuerfeld, umfasst, wobei das BA-Steuerfeld zweite Anzeigeinformationen umfasst, wobei die zweiten Anzeigeinformationen verwendet werden, um die Art der Startsequenznummer anzuzeigen, wobei die Art der Startsequenznummer die lokale Sequenznummer oder die globale Sequenznummer ist und ein erstes Bit in der Blockquittungs-Bitmap der Startsequenznummer entspricht.

7. Mehrfachverbindungskommunikationsverfahren, das umfasst:
Empfangen, S601, durch eine zweite Vorrichtung, eines Add-Block-Acknowledgment-Anforderungsrahmens, ADDBA-Anforderungsrahmens, der durch eine erste Vorrichtung gesendet wird, wobei der ADDBA-Anforderungsrahmen einen Referenzwert mindestens eines ersten Puffergrößenfelds und einen Referenzwert eines zweiten Puffergrößenfelds umfasst und die erste Vorrichtung und die zweite Vorrichtung Mehrfachverbindungsentitäten sind, die eine oder mehrere Verbindungen umfassen;
Senden, S602, durch die zweite Vorrichtung, eines ADDBA-Antwortrahmens an die erste Vorrichtung, wobei der ADDBA-Antwortrahmen einen Quittungswert des mindestens einen ersten Puffergrößenfelds und einen Quittungswert des zweiten Puffergrößenfelds umfasst; und
Einrichten, durch die zweite Vorrichtung, einer Mehrfachverbindungsblockquittungssitzung zwischen mehreren Verbindungen der ersten Vorrichtung und mehreren Verbindungen der zweiten Vorrichtung basierend auf dem ADDBA-Anforderungsrahmen und dem ADDBA-Antwortrahmen, wobei
ein erstes Puffergrößenfeld verwendet wird, um eine Größe eines lokalen Pufferraums, der einer Verbindung in den mehreren Verbindungen der ersten Vorrichtung und den mehreren Verbindungen der zweiten Vorrichtung entspricht, anzuzeigen, und das zweite Puffergrößenfeld verwendet wird, um eine Größe eines globalen Pufferraums, der durch die erste Vorrichtung und die zweite Vorrichtung aufrechterhalten wird, anzuzeigen, wobei das Verfahren ferner umfasst:
Aufrechterhalten, durch die zweite Vorrichtung, eines Empfangsfensters basierend auf dem ADDBA-Anforderungsrahmen und dem ADDBA-Antwortrahmen, wobei das Empfangsfenster der Verbindungsentität der zweiten Vorrichtung entspricht, wobei
eine Startsequenznummer des Empfangsfensters WinStartB2 ist, eine Endsequenznummer WinEndB2 ist und eine Fenstergröße WinSizeB2 ist, wobei WinSizeB2 gleich dem kleineren Wert zwischen dem Quittungswert des zweiten Puffergrößenfelds und einer Blockquittungs-Bitmap einer maximalen Länge ist.

8. Verfahren nach Anspruch 7, wobei der ADDBA-Anforderungsrahmen ein erstes Blockquittungsstartsequenzsteuerfeld und ein zweites Blockquittungsstartsequenzsteuerfeld umfasst;
wobei das erste Blockquittungsstartsequenzsteuerfeld verwendet wird, um eine erste Anfangssequenznummer einer Startsequenznummer eines ersten Scoreboards der Verbindung der zweiten Vorrichtung anzuzeigen, und eine Art der ersten Anfangssequenznummer eine lokale Sequenznummer ist; und
wobei das zweite Blockquittungsstartsequenzsteuerfeld verwendet wird, um eine zweite Anfangssequenznummer einer Startsequenznummer eines zweiten Scoreboards der Mehrfachverbindungsentität der zweiten Vorrichtung anzuzeigen, und eine Art der zweiten Anfangssequenznummer eine globale Sequenznummer ist.

9. Verfahren nach einem der Ansprüche 7 bis 8, wobei
der ADDBA-Anforderungsrahmen mindestens eines von einem Verbindungs-Bitmap-Feld und dem Referenzwert des mindestens einen ersten Puffergrößenfelds oder mindestens eines von einem Verbindungsanzahlfeld, einem Mehrfachverbindungsidentitätsnummernfeld und dem Referenzwert des mindestens einen ersten Puffergrößenfelds umfasst;
der ADDBA-Antwortrahmen mindestens eines von einem Verbindungs-Bitmap-Feld und dem Quittungswert des mindestens einen ersten Puffergrößenfelds oder mindestens eines von einem Verbindungsanzahlfeld, einem Mehrfachverbindungsidentitätsnummernfeld und dem Quittungswert des mindestens einen ersten Puffergrößenfelds umfasst;
der ADDBA-Anforderungsrahmen ein erstes Blockquittungsparametersatzfeld umfasst und das erste Blockquittungsparametersatzfeld den Referenzwert des zweiten Puffergrößenfelds umfasst; und
der ADDBA-Antwortrahmen ein zweites Blockquittungsparametersatzfeld umfasst und das zweite Blockquittungsparametersatzfeld den Quittungswert des zweiten Puffergrößenfelds umfasst.

10. Verfahren nach einem der Ansprüche 7 bis 9, wobei das Verfahren ferner umfasst:
Empfangen, durch die zweite Vorrichtung, eines Datenpakets, das durch die erste Vorrichtung gesendet wird; und
Senden, durch die zweite Vorrichtung, einer Quittungsnachricht als Reaktion auf das Datenpaket an die erste Vorrichtung, wobei
das Datenpaket eine lokale Sequenznummer und eine globale Sequenznummer umfasst, wobei die lokale Sequenznummer ein Bezeichner ist, der dem Datenpaket durch eine Verbindung, die sich in den mehreren Verbindungen befindet und die das Datenpaket sendet, zugewiesen wird, und die globale Sequenznummer ein Bezeichner, der dem Datenpaket durch die Mehrfachverbindungsentität zugewiesen wird, ist.

11. Verfahren nach Anspruch 10, wobei vor dem Senden, durch die zweite Vorrichtung, einer Quittungsnachricht als Reaktion auf das Datenpaket an die erste Vorrichtung, das Verfahren ferner umfasst:
Empfangen, durch die zweite Vorrichtung, eines Blockquittungsanforderungsrahmens oder eines Mehrbenutzerblockquittungsanforderungsauslöserrahmens, der durch die erste Vorrichtung gesendet wird, wobei der Blockquittungsanforderungsrahmen oder der Mehrbenutzerblockquittungsanforderungsauslöserrahmen ein Startsequenzsteuerfeld umfasst und das Startsequenzsteuerfeld eine Startsequenznummer umfasst; und
wobei der Blockquittungsanforderungsrahmen oder der Mehrbenutzerblockquittungsanforderungsauslöserrahmen ferner erste Anzeigeinformationen umfasst, wobei die ersten Anzeigeinformationen verwendet werden, um eine Art der Startsequenznummer anzuzeigen, und die Art der Startsequenznummer eine lokale Sequenznummer oder eine globale Sequenznummer umfasst.

12. Verfahren nach Anspruch 7, wobei das Verfahren ferner umfasst:
Aufrechterhalten, durch die zweite Vorrichtung, mehrerer erster Scoreboards und eines zweiten Scoreboards, wobei die mehreren ersten Scoreboards den mehreren Verbindungen entsprechen und das zweite Scoreboard der Mehrfachverbindungsentität entspricht;
wobei eine Startsequenznummer eines der ersten Scoreboards WinStartR1 ist, eine Endsequenznummer WinEndR1 ist und eine Scoreboardgröße WinSizeR1 gleich dem kleineren Wert zwischen einem Quittungswert des ersten Puffergrößenfelds, der einer Verbindung entspricht, die dem ersten Scoreboard entspricht, und einer Blockquittungs-Bitmap einer maximalen Länge ist; und
wobei eine Startsequenznummer des zweiten Scoreboards WinStartR2 ist, eine Endsequenznummer WinEndR2 ist und eine Scoreboardgröße WinSizeR2 ist, wobei WinSizeR2 gleich dem kleineren Wert zwischen der Quittungsgröße der zweiten Puffergröße und der Blockquittungs-Bitmap der maximalen Länge ist.

13. Verfahren nach Anspruch 10 oder 11, wobei die Quittungsnachricht ein Blockquittungsrahmen ist;
wobei der Blockquittungsrahmen das Startsequenzsteuerfeld umfasst, das Startsequenzsteuerfeld die Startsequenznummer und eine Blockquittungs-Bitmap umfasst und die Blockquittungs-Bitmap verwendet wird, um einen Empfangsstatus des Datenpakets, das durch die zweite Vorrichtung empfangen wird, anzuzeigen; und
wobei der Blockquittungsrahmen ferner ein Blockquittungssteuerfeld, BA-Steuerfeld, umfasst, wobei das BA-Steuerfeld zweite Anzeigeinformationen umfasst, wobei die zweiten Anzeigeinformationen verwendet werden, um die Art der Startsequenznummer anzuzeigen, wobei die Art der Startsequenznummer die lokale Sequenznummer oder die globale Sequenznummer ist und ein erstes Bit in der Blockquittungs-Bitmap der Startsequenznummer entspricht.

## Revendications

1. Procédé de communication multi-liaisons, comprenant :
l'envoi, S601, par un premier dispositif, d'une trame de demande d'accusé de réception d'ajout de bloc, ADDBA, à un second dispositif, la trame de demande ADDBA comprenant une valeur de référence d'au moins un premier champ de taille de tampon et une valeur de référence d'un second champ de taille de tampon, et le premier dispositif et le second dispositif sont des entités multi-liaisons comprenant une ou plusieurs liaisons ;
la réception, S602, par le premier dispositif, d'une trame de réponse ADDBA envoyée par le second dispositif, la trame de réponse ADDBA comprenant une valeur d'accusé de réception de l'au moins un premier champ de taille de tampon et une valeur d'accusé de réception du second champ de taille de tampon ; et
l'établissement, par le premier dispositif, d'une session d'accusé de réception de bloc multi-liaisons entre plusieurs liaisons du premier dispositif et plusieurs liaisons du second dispositif sur la base de la trame de demande ADDBA et de la trame de réponse ADDBA,
un premier champ de taille de tampon étant utilisé pour indiquer une taille d'un espace tampon local correspondant à une liaison dans les multiples liaisons du premier dispositif et les multiples liaisons du second dispositif, et le second champ de taille de tampon étant utilisé pour indiquer une taille d'un espace tampon global maintenu par le premier dispositif et le second dispositif, le procédé comprenant en outre :
le maintien, par le premier dispositif, de plusieurs premières fenêtres d'envoi et d'une seconde fenêtre d'envoi sur la base de la trame de demande ADDBA et de la trame de réponse ADDBA, les multiples premières fenêtres d'envoi correspondant aux multiples liaisons du premier dispositif, et de la seconde fenêtre d'envoi correspond à l'entité multi-liaisons du premier dispositif,
l'une des premières fenêtres d'envoi correspondant à un lien dans les multiples liaisons, un numéro de séquence de début de la première fenêtre d'envoi étant WinStartO1, un numéro de séquence de fin étant WinEnd01 et une taille de fenêtre étant WinSize01, WinSize01 étant égal à la valeur d'accusé de réception de la première taille de tampon correspondant au lien ; et
un numéro de séquence de début de la seconde fenêtre d'envoi étant WinStartO2, un numéro de séquence de fin étant WinEndO2 et une taille de fenêtre étant WinSizeO2, WinSizeO2 étant égal à la valeur d'accusé de réception qui est de la seconde taille de tampon et qui est négociée à l'aide de la demande ADDBA la trame et la trame de réponse ADDBA.

2. Procédé selon la revendication 1, dans lequel la trame de demande ADDBA comprend au moins un premier champ de commande de séquence de début d'accusé de réception de bloc et un second champ de commande de séquence de début d'accusé de réception de bloc ;
le premier champ de commande de séquence de début d'accusé de réception de bloc est utilisé pour indiquer une valeur initiale d'un premier numéro de séquence initial d'un numéro de séquence de départ d'un premier tableau de bord de la liaison du second dispositif, et un type du premier numéro de séquence initial est un local numéro de séquence ; et
le second champ de commande de séquence de début d'accusé de réception de bloc est utilisé pour indiquer une valeur initiale d'un second numéro de séquence initiale d'un numéro de séquence de départ d'un second tableau de bord de l'entité multi-liaisons du second dispositif, et un type du second numéro de séquence initiale est un numéro de séquence globale.

3. Procédé selon l'une quelconque des revendications 1 à 2, dans lequel
la trame de demande ADDBA comprend au moins l'un d'un champ de table de bits de liaison et de la valeur de référence de l'au moins un premier champ de taille de tampon, ou d'au moins l'un d'un champ de quantité de liaison, d'un champ de numéro d'identité multi-liaisons et de la valeur de référence de l'au moins un premier champ de taille de tampon ;
la trame de réponse ADDBA comprend au moins l'un d'un champ de table de bits de liaison et de la valeur d'accusé de réception de l'au moins un premier champ de taille de tampon, ou d'au moins l'un d'un champ de quantité de liaison, d'un champ de numéro d'identité multi-liaisons et de la valeur d'accusé de réception de l'au moins un premier champ de taille de tampon ;
la trame de demande ADDBA comprend un premier champ d'ensemble de paramètres d'accusé de réception de bloc, et le premier champ d'ensemble de paramètres d'accusé de réception de bloc comprend la valeur de référence du second champ de taille de tampon ; et
la trame de réponse ADDBA comprend un second champ d'ensemble de paramètres d'accusé de réception de bloc, et le second champ d'ensemble de paramètres d'accusé de réception de bloc comprend la valeur d'accusé de réception du second champ de taille de tampon.

4. Procédé selon l'une quelconque des revendications 1 à 3, dans lequel le procédé comprend en outre :
l'envoi, par le premier dispositif, d'un paquet de données au second dispositif ; et
la réception, par le premier dispositif, d'un message d'accusé de réception renvoyé par le second dispositif en réponse au paquet de données,
le paquet de données comprenant un numéro de séquence locale et un numéro de séquence globale, le numéro de séquence locale étant un identifiant attribué au paquet de données par une liaison qui se trouve dans les multiples liaisons et qui envoie le paquet de données, et le numéro de séquence globale étant un identifiant attribué au paquet de données par l'entité multi-liaisons.

5. Procédé selon la revendication 4, dans lequel avant la réception, par le premier dispositif, d'un message d'accusé de réception renvoyé par le second dispositif en réponse au paquet de données, le procédé comprend en outre :
l'envoi, par le premier dispositif, d'une trame de demande d'accusé de réception de bloc ou d'une trame de déclenchement de demande d'accusé de réception de bloc multi-utilisateurs au second dispositif, la trame de demande d'accusé de réception de bloc ou la trame de déclenchement de demande d'accusé de réception de bloc multi-utilisateurs comprenant un champ de commande de séquence de départ, et le champ de commande de séquence de départ comprend un numéro de séquence de départ ; et
la trame de demande d'accusé de réception de bloc ou la trame de déclenchement de demande d'accusé de réception de bloc multi-utilisateurs comprend en outre des premières informations d'indication, les premières informations d'indication étant utilisées pour indiquer un type du numéro de séquence de départ, et le type du numéro de séquence de départ comprenant un numéro de séquence locale ou un numéro de séquence globale.

6. Procédé selon la revendication 4 ou 5, dans lequel la réception, par le premier dispositif, d'un message d'accusé de réception renvoyé par le second dispositif en réponse au paquet de données comprend :
la réception, par le premier dispositif, d'une trame d'accusé de réception de bloc envoyée par le second dispositif, la trame d'accusé de réception de bloc comprenant le champ de commande de séquence de début, le champ de commande de séquence de début comprenant le numéro de séquence de début et une table de bits d'accusé de réception de bloc, et la table de bits d'accusé de réception de bloc étant utilisée pour indiquer un état de réception du paquet de données reçu par le second dispositif ; et
la trame d'accusé de réception de bloc comprenant en outre un champ de commande BA d'accusé de réception de bloc, le champ de commande BA comprenant des secondes informations d'indication, les secondes informations d'indication étant utilisées pour indiquer le type du numéro de séquence de départ, le type du numéro de séquence de départ étant la séquence locale numéro ou le numéro de séquence global, et un premier bit dans la table de bits d'accusé de réception de bloc correspondant au numéro de séquence de départ.

7. Procédé de communication multi-liaisons, comprenant :
la réception, S601, par un second dispositif, d'une trame de demande ADDBA d'accusé de réception d'ajout de bloc envoyée par un premier dispositif, la trame de demande ADDBA comprenant une valeur de référence d'au moins un premier champ de taille de tampon et une valeur de référence d'un second champ de taille de tampon, et le premier dispositif et le second dispositif étant des entités multi-liaisons comprenant une ou plusieurs liaisons ;
l'envoi, S602, par le second dispositif, d'une trame de réponse ADDBA au premier dispositif, la trame de réponse ADDBA comprenant une valeur d'accusé de réception de l'au moins un premier champ de taille de tampon et une valeur d'accusé de réception du second champ de taille de tampon ; et
l'établissement, par le second dispositif, d'une session d'accusé de réception de bloc multi-liaisons entre plusieurs liaisons du premier dispositif et plusieurs liaisons du second dispositif sur la base de la trame de demande ADDBA et de la trame de réponse ADDBA,
un premier champ de taille de tampon étant utilisé pour indiquer une taille d'un espace tampon local correspondant à une liaison dans les multiples liaisons du premier dispositif et les multiples liaisons du second dispositif, et le second champ de taille de tampon étant utilisé pour indiquer une taille d'un espace tampon global maintenu par le premier dispositif et le second dispositif, le procédé comprenant en outre :
le maintien, par le second dispositif, d'une fenêtre de réception sur la base de la trame de demande ADDBA et de la trame de réponse ADDBA, la fenêtre de réception correspondant à l'entité de liaison du second dispositif,
un numéro de séquence de début de la fenêtre de réception étant WinStartB2, un numéro de séquence de fin étant WinEndB2 et une taille de fenêtre étant WinSizeB2, WinSizeB2 étant égal à la valeur la plus petite entre la valeur d'accusé de réception du second champ de taille de tampon et une table de bits d'accusé de réception de bloc d'un longueur maximale.

8. Procédé selon la revendication 7, dans lequel la trame de demande ADDBA comprend un premier champ de commande de séquence de début d'accusé de réception de bloc et un second champ de commande de séquence de début d'accusé de réception de bloc ;
le premier champ de commande de séquence de début d'accusé de réception de bloc est utilisé pour indiquer un premier numéro de séquence initial d'un numéro de séquence de départ d'un premier tableau de bord de la liaison du second dispositif, et un type du premier numéro de séquence initiale est un numéro de séquence locale ; et
le second champ de commande de séquence de début d'accusé de réception de bloc est utilisé pour indiquer un second numéro de séquence initiale d'un numéro de séquence de départ d'un second tableau de bord de l'entité multi-liaisons du second dispositif, et un type du second numéro de séquence initiale est un numéro de séquence globale.

9. Procédé selon l'une quelconque des revendications 7 à 8, dans lequel
la trame de demande ADDBA comprend au moins l'un d'un champ de table de bits de liaison et de la valeur de référence de l'au moins un premier champ de taille de tampon, ou d'au moins l'un d'un champ de quantité de liaison, d'un champ de numéro d'identité multi-liaisons et de la valeur de référence de l'au moins un premier champ de taille de tampon ;
la trame de réponse ADDBA comprend au moins l'un d'un champ de table de bits de liaison et de la valeur d'accusé de réception de l'au moins un premier champ de taille de tampon, ou d'au moins l'un d'un champ de quantité de liaison, d'un champ de numéro d'identité multi-liaisons et de la valeur d'accusé de réception de l'au moins un premier champ de taille de tampon ;
la trame de demande ADDBA comprend un premier champ d'ensemble de paramètres d'accusé de réception de bloc, et le premier champ d'ensemble de paramètres d'accusé de réception de bloc comprend la valeur de référence du second champ de taille de tampon ; et
la trame de réponse ADDBA comprend un second champ d'ensemble de paramètres d'accusé de réception de bloc, et le second champ d'ensemble de paramètres d'accusé de réception de bloc comprend la valeur d'accusé de réception du second champ de taille de tampon.

10. Procédé selon l'une quelconque des revendications 7 à 9, dans lequel le procédé comprend en outre :
la réception, par le second dispositif, d'un paquet de données envoyé par le premier dispositif ; et
l'envoi, par le second dispositif, d'un message d'accusé de réception en réponse au paquet de données au premier dispositif,
le paquet de données comprenant un numéro de séquence locale et un numéro de séquence globale, le numéro de séquence locale étant un identifiant attribué au paquet de données par une liaison qui se trouve dans les multiples liaisons et qui envoie le paquet de données, et le numéro de séquence globale étant un identifiant attribué au paquet de données par l'entité multi-liaisons.

11. Procédé selon la revendication 10, dans lequel avant l'envoi, par le second dispositif, d'un message d'accusé de réception en réponse au paquet de données au premier dispositif, le procédé comprend en outre :
la réception, par le second dispositif, d'une trame de demande d'accusé de réception de bloc ou d'une trame de déclenchement de demande d'accusé de réception de bloc multi-utilisateurs envoyée par le premier dispositif, la trame de demande d'accusé de réception de bloc ou la trame de déclenchement de demande d'accusé de réception de bloc multi-utilisateurs comprenant un champ de commande de séquence de départ, et le champ de commande de séquence de départ comprend un numéro de séquence de départ ; et
la trame de demande d'accusé de réception de bloc ou la trame de déclenchement de demande d'accusé de réception de bloc multi-utilisateurs comprend en outre des premières informations d'indication, les premières informations d'indication étant utilisées pour indiquer un type du numéro de séquence de départ, et le type du numéro de séquence de départ comprenant un numéro de séquence locale ou un numéro de séquence globale.

12. Procédé selon la revendication 7, dans lequel le procédé comprend en outre :
le maintien, par le second dispositif, de plusieurs premiers tableaux de scores et un second tableau de bord, les multiples premiers tableaux de bord correspondant aux multiples liaisons, et le second tableau de bord correspondant à l'entité multi-liaisons ;
un numéro de séquence de départ de l'un des premiers tableaux de bord est WinStartR1, un numéro de séquence de fin est WinEndR1 et une taille de tableau de bord WinSizeR1 est égale à la valeur la plus petite entre une valeur de confirmation du premier champ de taille de tampon correspondant à un lien correspondant au premier tableau de bord et une table de bits d'accusé de réception de bloc d'une longueur maximale ; et
un numéro de séquence de début du second tableau de bord est WinStartR2, un numéro de séquence de fin est WinEndR2 et une taille de tableau de bord est WinSizeR2, WinSizeR2 étant égal à la valeur la plus petite entre la valeur d'accusé de réception de la seconde taille de tampon et la table de bits d'accusé de réception de bloc de la longueur maximale.

13. Procédé selon la revendication 10 ou 11, dans lequel le message d'accusé de réception est une trame d'accusé de réception de bloc ;
la trame d'accusé de réception de bloc comprend le champ de commande de séquence de début, le champ de commande de séquence de départ comprend le numéro de séquence de début et une table de bits d'accusé de réception de bloc, et la table de bits d'accusé de réception de bloc est utilisée pour indiquer un état de réception du paquet de données reçu par le second dispositif ; et
la trame d'accusé de réception de bloc comprenant en outre un champ de commande BA d'accusé de réception de bloc, le champ de commande BA comprenant des secondes informations d'indication, les secondes informations d'indication étant utilisées pour indiquer le type du numéro de séquence de départ, le type du numéro de séquence de départ étant la séquence locale numéro ou le numéro de séquence global, et un premier bit dans la table de bits d'accusé de réception de bloc correspondant au numéro de séquence de départ.
